# EUROPEAN PATENT SPECIFICATION

(11) **EP 3 020 774 B1**
(45) Date of publication and mention of the grant of the patent: **28.12.2022**
(21) Application number: 14193229.3
(22) Date of filing: 14.11.2014
(51) Int. Cl.: C09J 153/02, C09J 7/22, C09J 7/38

(54) **RUBBER-BASED MULTILAYER PRESSURE-SENSITIVE ADHESIVE ASSEMBLY**
KAUTSCHUKBASIERTE, MEHRSCHICHTIGE, DRUCKEMPFINDLICHE HAFTKLEBEANORDNUNG
FILM ADHÉSIF MULTICOUCHE À BASE DE CAOUTCHOUC SENSIBLE À LA PRESSION

(43) Date of publication of application: 18.05.2016
(73) Proprietor: 3M Innovative Properties Company, Saint Paul, MN 55133-3427 (US)
(72) Inventor: Bieber, Pierre Reinhard, 41453 Neuss (DE); Stegmaier, Petra Maria, 41453 Neuss (DE); Overbeck, Janina, 41453 Neuss (DE); Goeb, Siegfried Rainer, 41453 Neuss (DE)
(74) Representative: Mathys & Squire

(56) References cited:
- EP-A1- 2 832 779
- WO-A1-2008/073669

## Description

### Technical Field

The present disclosure relates generally to the field of pressure sensitive adhesives (PSA), more specifically to the field of multilayer rubber-based pressure sensitive adhesive assemblies. The present disclosure also relates to a method of manufacturing such pressure sensitive adhesive assemblies and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherend, and (4) sufficient cohesive strength. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2nd Ed., Hanser Gardner Publication, Cincinnati, OH, 2002. These measurements taken together constitute the balance of properties often used to characterize a PSA.

With broadened use of pressure-sensitive tapes over the years, performance requirements have become more demanding. Shear holding capability, for example, which originally was intended for applications supporting modest loads at room temperature, has now increased substantially for many applications in terms of operating temperature and load. Many applications require pressure sensitive adhesives to support a load at elevated temperatures, typically in the range of from 70°C to 120°C, for which high cohesive strengths are required. Similarly, an increased need has arisen for pressure sensitive adhesives having improved and versatile adhesion characteristics; in particular with respect to peel forces and shear resistance on various types of difficult to adhere surfaces, such as in particular the so-called low surface energy (LSE) and medium surface energy (MSE) substrates.

In that context, multilayer pressure sensitive adhesive assemblies are known to provide better flexibility and versatility in terms of bonding performance. However, known multilayer pressure sensitive adhesive assemblies typically suffer from lack of sufficient anchoring between layers, which may lead to delamination between layers, especially at high temperature. In addition, known multilayer pressure sensitive adhesive assemblies generally involve complex and costly manufacturing processes. Accordingly, more cost effective manufacturing processes to make pressure sensitive adhesive assemblies are still required in the adhesive tape industry.

In addition to increasing performance requirements with regard to pressure sensitive adhesives, volatile organic compounds (VOC) reduction regulations are becoming increasingly important in particular for various kind of interior applications (occupational hygiene and occupational safety) such as e.g. in the construction market or in the automotive or electronics industries. Known acrylate-based pressure sensitive adhesives typically contain notable amounts of low molecular weight organic residuals, such as un-reacted monomers arising from their polymerization process, polymerization initiator residuals, contaminations from raw materials or degradation products formed during the manufacturing process. These low molecular weight residuals qualifying as VOC may diffuse out of the adhesive tape and can be potentially harmful. Known acrylate-based pressure sensitive adhesives, if not crosslinked, also generally suffer from lack of cohesive strength and excessive tendency to flow. This aspect may render the application and processability of uncrosslinked acrylate-based pressure sensitive adhesives particularly problematic, especially when made by a hotmelt process.

The reduction of organic solvent usage in the manufacturing process of pressure sensitive adhesives has quickly emerged as one straightforward means to reduce the overall VOC levels. The use of specific scavengers for organic contaminants, as described in WO 01/44400 (Yang), is another alternative way to achieve reduced VOC levels. However, the solutions for reducing overall VOC levels known from the prior art are often associated with increased manufacturing complexity and production costs.

The pressure sensitive adhesive materials known from the prior art do not often provide sufficient robustness and/or tack to various types of substrate, including the so-called LSE and MSE substrates, in combination with reduced VOC level characteristics. In particular, the overall VOC levels observed do often not fulfill the requirements for various kind of interior applications such as e.g. in the construction market or in the automotive or electronics industries. Partial solutions have been described e.g. in US 2003/0082362 A1 (Khandpur et al.), in US 2004/0082700 A1 (Khandpur et al.), and in US 2014/0057091 A1 (Krawinkel et al.).

Patent application WO2008073669A discloses pressure sensitive adhesives comprising a linear block copolymer having a rubbery block and at least one glassy block; a multi-arm block copolymer having at least three arms, each having both a rubbery block and a glassy block; a first high glass transition temperature tackifier compatible with the rubbery blocks; a second high glass transition temperature tackifier having compatible with the glassy blocks; and at least one of a low Tg tackifier, a plasticizer, and combinations thereof.

Without contesting the technical advantages associated with the pressure sensitive adhesives known in the art, there is still a need for a robust and cost-effective multilayer pressure sensitive adhesive assembly providing reduced overall VOC levels whilst providing excellent and versatile adhesion characteristics, in particular with respect to various types of substrate, including LSE and MSE substrates. Other advantages of the pressure sensitive adhesive assemblies and methods of the disclosure will be apparent from the following description.

### Summary

According to one aspect, the present disclosure relates to a multilayer pressure sensitive adhesive assembly comprising a polymeric foam layer having a first major surface and a second major surface, wherein the multilayer pressure sensitive adhesive assembly further comprises a first pressure sensitive adhesive layer bonded to the first major surface of the polymeric foam layer and a second pressure sensitive adhesive layer bonded to the second major surface of the polymeric foam layer, wherein the first pressure sensitive adhesive comprises:
a) a multi-arm block copolymer of the formula Qn-Y, wherein:
   (i) Q represents an arm of the multi-arm block copolymer and each arm independently has the formula G-R,
   (ii) n represents the number of arms and is a whole number of at least 3, and
   (iii) Y is the residue of a multifunctional coupling agent,
   wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polyisobutylene plasticizer having a weight average molecular weight Mw of at least 10.000 g/mol, when measured by light scattering according to ASTM D4001-13;
c) at least one hydrocarbon tackifier selected from the group consisting of polymeric terpenes, hetero-functional terpenes, coumarone-indene resins, esters of rosin acids, disproportionated rosin acid esters, hydrogenated rosin acids, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and blends thereof wherein the hydrocarbon tackifier has a Volatile Organic Compound (VOC) value less than 1000 ppm, when measured by thermogravimetric analysis according to the weight loss test method (TGA test method) described in the experimental section; and
d) optionally, a linear block copolymer of the formula L - (G)m, wherein L is a rubbery block comprising a polymerized olefin, a polymerized conjugated diene, a hydrogenated derivative of a polymerized conjugated diene, or any combinations thereof; and wherein m is 1 or 2;
wherein the multilayer pressure sensitive adhesive assembly is obtained by hotmelt co-extrusion of the polymeric foam layer, the first pressure sensitive adhesive layer and the second pressure sensitive adhesive layer.

In another aspect, the present disclosure is directed to a method of manufacturing a multilayer pressure sensitive adhesive assembly as described above, which comprises the step of hotmelt co-extruding the polymeric foam layer and the first pressure sensitive adhesive layer.

According to still another aspect, the present disclosure relates to the use of a multilayer pressure sensitive adhesive assembly as described above for industrial applications, preferably for interior applications, more preferably for construction market applications, automotive applications or electronic applications.

### Detailed description

According to a first aspect, the present disclosure relates to a multilayer pressure sensitive adhesive assembly comprising a polymeric foam layer having a first major surface and a second major surface, wherein the multilayer pressure sensitive adhesive assembly further comprises a first pressure sensitive adhesive layer bonded to the first major surface of the polymeric foam layer and a second pressure sensitive adhesive layer bonded to the second major surface of the polymeric foam layer, wherein the first pressure sensitive adhesive comprises:
a) a multi-arm block copolymer of the formula Qn-Y, wherein:
   (i) Q represents an arm of the multi-arm block copolymer and each arm independently has the formula G-R,
   (ii) n represents the number of arms and is a whole number of at least 3, and
   (iii) Y is the residue of a multifunctional coupling agent,
   wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polyisobutylene plasticizer having a weight average molecular weight Mw of at least 10.000 g/mol, when measured by light scattering according to ASTM D4001-13;
c) at least one hydrocarbon tackifier selected from the group consisting of polymeric terpenes, hetero-functional terpenes, coumarone-indene resins, esters of rosin acids, disproportionated rosin acid esters, hydrogenated rosin acids, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and blends thereof wherein the hydrocarbon tackifier has a Volatile Organic Compound (VOC) value less than 1000 ppm, when measured by thermogravimetric analysis according to the weight loss test method (TGA test method) described in the experimental section; and
d) optionally, a linear block copolymer of the formula L - (G)m, wherein L is a rubbery block comprising a polymerized olefin, a polymerized conjugated diene, a hydrogenated derivative of a polymerized conjugated diene, or any combinations thereof; and wherein m is 1 or 2;
wherein the multilayer pressure sensitive adhesive assembly is obtained by hotmelt co-extrusion of the polymeric foam layer, the first pressure sensitive adhesive layer and the second pressure sensitive adhesive layer.

In the context of the present disclosure, it has been surprisingly found that a multilayer pressure sensitive adhesive assembly according to the invention r provides outstanding robustness and excellent characteristics and performance as to overall VOC levels reduction.

In some advantageous aspects, the multilayer pressure sensitive adhesive assemblies as described herein are characterized by very low or even substantial absence of perceptible odor. In some aspects, the multilayer pressure sensitive adhesive assemblies according to the present disclosure are characterized by further providing excellent characteristics and performance as to overall fogging levels reduction. The low fogging characteristics typically translate into improved resistance of outgassed components to condensation, as well as improved thermal stability of the corresponding pressure sensitive adhesive.

In addition, the multilayer pressure sensitive adhesive assemblies as described herein provide surprisingly good overall balance of adhesive and cohesive characteristics (in particular with respect to peel forces and static shear resistance) on various types of substrates, including LSE and MSE substrates, and in particular on automotive clear coats, automotive varnishes or automotive paints. Furthermore, the multilayer pressure sensitive adhesive assemblies as described herein provide excellent resistance to delamination, even at high temperatures such as e.g. 70°C and even higher.

Advantageously, the multilayer pressure sensitive adhesive assemblies according to the present disclosure provide excellent surface and interface properties, which is particularly surprising in those executions where the polymeric foam layer is foamed with expandable microspheres. Without wishing to be bound by theory, it is believed that these outstanding properties are due to the compounds used to form the polymeric foam layer and the first pressure sensitive layer being in melted state at the time the co-extrusion process step is performed. This results into smoother surface of the first pressure sensitive layer outer surface and smoother interface (void-free interface) between the polymeric foam layer and the first pressure sensitive layer. The excellent surface and interface properties of the multilayer pressure sensitive adhesive assemblies according to the present disclosure result into better wetting on the substrate to adhere to and therefore into improved adhesion properties.

As such, the multilayer pressure sensitive adhesive assemblies according to the present disclosure are particularly suited for (industrial) interior applications, more in particular for construction market applications, automotive applications or electronic applications. In the context of automotive applications, the multilayer pressure sensitive adhesive assemblies as described herein may find particular use for adhering e.g. automotive body side mouldings, weather strips or rearview mirrors. In some aspects, the multilayer pressure sensitive adhesive assemblies according to the present disclosure are provided with advantageous low fogging characteristics, which are particularly suited for electronic applications.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE, low density polyethylene or LDPE, LLDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, PC, PVC, PA, polyurethane, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

The surface energy is typically determined from contact angle measurements as described, for example, in ASTM D7490-08.

The first pressure sensitive adhesive according to the present disclosure comprises a multi-arm block copolymer of the formula Qₙ-Y, wherein:
(i) Q represents an arm of the multi-arm block copolymer and each arm independently has the formula G-R,
(ii) n represents the number of arms and is a whole number of at least 3, and
(iii) Y is the residue of a multifunctional coupling agent,
wherein each R is a rubbery block comprising a polymerized conjugated diene, a hydrogenated derivative of a polymerized conjugated diene, or any combinations thereof; and each G is a glassy block comprising a polymerized monovinyl aromatic monomer.

In a typical aspect, a rubbery block exhibits a glass transition temperature (Tg) of less than room temperature. In some aspects, the Tg of the rubbery block is less than about 0 °C, or even less than about -10 °C. In some aspects, the Tg of the rubbery block is less than about -40 °C, or even less than about -60°C.

In a typical aspect, a glassy block exhibits a Tg of greater than room temperature. In some embodiments, the Tg of the glassy block is at least about 40°C, at least about 60 °C, at least about 80°C, or even at least about 100°C.

The terms "glass transition temperature" and "Tg" are used interchangeably and refer to the glass transition temperature of a material or a mixture. Unless otherwise indicated, glass transition temperature values are determined by Differential Scanning Calorimetry (DSC).

In a particular aspect of the present disclosure, the multi-arm styrenic block copolymer for use herein is such that n ranges from 3 to 10 or even from 3 to 5. In some other aspects, n is 4, while in some other executions, n is equal to 6 or more.

Suitable rubbery blocks R for use herein comprise polymerized conjugated dienes, hydrogenated derivatives of a polymerized conjugated diene, or combinations thereof. In some typical aspects, the rubbery block of at least one arm comprises a polymerized conjugated diene selected from the group consisting of isoprene, butadiene, ethylene butadiene copolymers, hydrogenated derivatives of polyisoprene or polybutadiene, and any combinations or mixtures thereof. According to an advantageous aspect, the rubbery blocks of each arm comprise a polymerized conjugated diene selected from the group consisting of isoprene, butadiene, ethylene butadiene copolymers, hydrogenated derivatives of polyisoprene or polybutadiene, and combinations or mixtures thereof.

According to a preferred aspect of the multilayer pressure sensitive adhesive assembly according to the present disclosure, at least one of the rubbery blocks of the multi-arm block copolymer comprises a conjugated diene selected from the group consisting of isoprene, butadiene, and any combinations thereof. More preferably, each of the rubbery blocks of the multi-arm block copolymer comprises a conjugated diene selected from the group consisting of isoprene, butadiene, and any combinations thereof.

According to a particularly advantageous aspect of the multilayer pressure sensitive adhesive assembly according to the present disclosure, at least one arm of the multi-arm block copolymer is selected from the group consisting of styrene-isoprene-styrene, styrene-butadiene-styrene, styrene-ethylene-butylene-styrene, styrene-ethylene-propylene-styrene, and combinations thereof. More preferably, each arm of the multi-arm block copolymer is selected from the group consisting of styrene-isoprene-styrene, styrene-butadiene-styrene, styrene-ethylene-butylene-styrene, styrene-ethylene-propylene-styrene, and any combinations thereof. Even more preferably, each arm of the multi-arm block copolymer is selected from the group consisting of styrene-isoprene-styrene, styrene-butadiene-styrene, and any combinations thereof.

Suitable glassy blocks G for use herein comprise a polymerized monovinyl aromatic monomer. In some typical aspects, the glassy block of at least one arm comprises a monovinyl aromatic monomer selected from the group consisting of styrene, styrene-compatible blends, and any combinations thereof. According to an advantageous aspect, the glassy blocks of each arm comprise a monovinyl aromatic monomer selected from the group consisting of styrene, styrene-compatible blends, and any combinations thereof.

According to an advantageous execution of the present disclosure, the multi-arm block copolymer for use herein is a (multi-arm) star block copolymer. In a more advantageous aspect of the multilayer pressure sensitive adhesive assembly according to the present disclosure, the multi-arm block copolymer is a polymodal block copolymer. As used herein, the term "polymodal" means that the copolymer comprises endblocks having at least two different molecular weights. Such a block copolymer may also be characterized as having at least one "high" molecular weight endblock, and at least one "low" molecular weight endblock, wherein the terms high and low are used relative to each other. In some particular aspects, the ratio of the number average molecular weight of the high molecular weight endblock, (Mn)H, relative to the number average molecular weight of the low molecular weight endblock,(Mn)L, is at least about 1.25.

In some particular aspects, (Mn)H ranges from about 5000 to about 50000. In some embodiments, (Mn)H is at least about 8000, and in some aspects at least about 10000. In some aspects, (Mn)H is no greater than about 35000. In some aspects, (Mn)L ranges from about 1000 to about 10000. In some aspects, (Mn)L is at least about 2000, and, in some aspects, at least about 4000. In some aspects, (Mn)L is less than about 9000, and, in some aspects, less than about 8000.

According to another beneficial aspect, the multi-arm block copolymer is an asymmetric block copolymer. As used herein, the term "asymmetric" means that the arms of the block copolymer are not all identical. Generally, a polymodal block copolymer is an asymmetric block copolymer (i.e., a polymodal asymmetric block copolymer) as not all arms of a polymodal block copolymer are identical since the molecular weights of the end blocks are not all the same. In some aspects, the block copolymers of the present disclosure are polymodal, asymmetric block copolymers.

Multi-arm block copolymers for use herein are described e.g. in US 7,163,741 B1 (Khandpur et al.). Methods of making multi-arm block copolymers, in particular polymodal asymmetric, block copolymers are described in, e.g., U.S. Patent No. 5,296,547 (Nestegard et al.), or in U.S. Patent No. 5,393,787 (Nestegard et al.).

Generally, the multifunctional coupling agent for use herein may be any polyalkenyl coupling agent or other material known to have functional groups that can react with carbanions of the living polymer to form linked polymers. The polyalkenyl coupling agent may be aliphatic, aromatic, or heterocyclic. Exemplary aliphatic polyalkenyl coupling agents include, but are not limited to, polyvinyl and polyalkyl acetylenes, diacetylenes, phosphates, phosphites, and dimethacrylates (e.g., ethylene dimethacrylate). Exemplary aromatic polyalkenyl coupling agents include but are not limited to, polyvinyl benzene, polyvinyl toluene, polyvinyl xylene, polyvinyl anthracene, polyvinyl naphthalene, and divinyldurene. Exemplary polyvinyl groups include, but are not limited to, divinyl, trivinyl, and tetravinyl groups. In some aspects, divinylbenzene (DVB) may be used, and may include o- divinyl benzene, m-divinyl benzene, p-divinyl benzene, and mixtures thereof. Exemplary heterocyclic polyalkenyl coupling agents include, but are not limited to, divinyl pyridine, and divinyl thiophene. Other exemplary multifunctional coupling agents include, but are not limited to, silicon halides, polyepoxides, polyisocyanates, polyketones, polyanhydrides, and dicarboxylic acid esters.

According to a typical aspect, the multi-arm block copolymer as described above is used for example in amounts of up to 80 wt%, based on the weight of the pressure sensitive adhesive. In some exemplary aspects, the amount of multi-arm block copolymer can be for example, in the range of from 20 wt% to 80 wt%, from 20 wt% to 70 wt%, from 25 wt% to 60 wt%, or even from 25 wt% to 50 wt%, based on the weight of the pressure sensitive adhesive.

In some advantageous aspects, the first pressure sensitive adhesive of the present disclosure may optionally comprise a linear block copolymer of the formula L - (G)m, wherein L represents a rubbery block, G represents a glassy block, and m, the number of glassy blocks, is 1 or 2. Suitable rubbery blocks L for use herein comprise a polymerized olefin, a polymerized conjugated diene, a hydrogenated derivative of a polymerized conjugated diene, or any combinations thereof; and wherein m is 1 or 2. In the context of the present disclosure, it has been surprisingly found that the addition of a linear block copolymer as described above may provide various beneficial effects to the (co)polymeric precursor of the first pressure sensitive adhesive assembly and to the resulting multilayer pressure sensitive adhesive assembly. In particular, the addition of a linear block copolymer as described above may advantageously impact the processability of the (co)polymeric precursor of the first pressure sensitive adhesive due to the viscosity lowering effect of this compound, which in turn results in pressure sensitive adhesives provided with an improved visual and aesthetic appearance. Also, the presence of a linear block copolymer as described above may additionally provide the resulting pressure sensitive adhesive with an improved tack performance.

In some aspects, m is one, and the linear block copolymer is a diblock copolymer comprising one rubbery block L and one glassy block G. In some aspects, m is two, and the linear block copolymer comprises two glassy endblocks and one rubbery midblock, i.e., the linear block copolymer is a triblock copolymer.

In some aspects, the rubbery block L comprises a polymerized conjugated diene, a hydrogenated derivative of a polymerized conjugated diene, or any combinations thereof. In some aspects, the conjugated dienes comprise 4 to 12 carbon atoms. Exemplary conjugated dienes include, but are not limited to, butadiene, isoprene, ethylbutadiene, phenylbutadiene, piperylene, pentadiene, hexadiene, ethylhexadiene, and dimethylbutadiene. The polymerized conjugated dienes may be used individually or as copolymers with each other. Preferably, the rubbery block L of the linear block copolymer comprises a conjugated diene selected from the group consisting of isoprene, butadiene, and any combinations thereof. In some other aspects, the rubbery block L comprises a polymerized olefin, such as e.g. isobutylene.

In some aspects, at least one glassy block G comprises a polymerized monovinyl aromatic monomer. In some other aspects, both glassy blocks of a triblock copolymer comprise a polymerized monovinyl aromatic monomer. In some other aspects, the linear block copolymer comprises two glassy blocks. According to still another aspect, the monovinyl aromatic monomers comprise 8 to 18 carbon atoms. Exemplary monovinyl aromatic monomers include, but are not limited to, styrene, vinylpyridine, vinyl toluene, alpha-methyl styrene, methyl styrene, dimethyl styrene, ethylstyrene, diethyl styrene, t-butylstyrene, di-n-butylstyrene, isopropylstyrene, other alkylated-styrenes, styrene analogs, and styrene homologs. In some aspects, the monovinyl aromatic monomer is selected from the group consisting of styrene, styrene-compatible monomers or monomer blends, and any combinations thereof.

As used herein, "styrene-compatible monomers or monomer blends" refers to a monomer or blend of monomers, which may be polymerized or copolymerized, that preferentially associate with polystyrene or with the polystyrene endblocks of a block copolymer. The compatibility can arise from actual copolymerization with monomeric styrene; solubility of the compatible monomer or blend, or polymerized monomer or blend in the polystyrene phase during hot melt or solvent processing; or association of the monomer or blend with the styrene-rich phase domain on standing after processing.

In some other aspects, the linear block copolymer is a diblock copolymer. In some aspects, the diblock copolymer is selected from the group consisting of styrene-isoprene, and styrene-butadiene. In some aspects, the linear block copolymer is a triblock copolymer. In some aspects, the triblock copolymer is selected from the group consisting of styrene-isoprene-styrene, styrene-butadiene-styrene, styrene-ethylene-butylene-styrene, styrene-ethylene-propylene-styrene, styrene-isobutylene-styrene, and any combinations thereof. Diblock and triblock copolymers are commercially available, e.g., those under the trade name VECTOR available from Dexco Polymer LP, Houston, Texas; and those available under the trade name KRATON available from Kraton Polymers U.S. LLC, Houston, Texas. As manufactured and/or purchased, triblock copolymers may contain some fraction of diblock copolymer as well.

In a particular aspect of the multilayer pressure sensitive adhesive assembly according to the present disclosure, the hydrocarbon tackifier(s) for use herein have a Volatile Organic Compound (VOC) value of less than 800 ppm, less than 600 ppm, less than 400 ppm or even less than 200 ppm, when measured by thermogravimetric analysis according to the weight loss test method described in the experimental section.

According to a preferred aspect, the hydrocarbon tackifier(s) for use herein have a Volatile Fogging Compound (FOG) value of less than 1500 ppm, less than 1000 ppm, less than 800 ppm, less than 600 ppm, or even less than 500 ppm, when measured by thermogravimetric analysis according to the weight loss test methods described in the experimental section. In the context of the present disclosure, it has been surprisingly found that a pressure sensitive adhesive comprising a rubber-based elastomeric material and at least one hydrocarbon tackifier, wherein the hydrocarbon tackifier(s) have a Volatile Fogging Compound (FOG) value of less than 1500 ppm, less than 1000 ppm, less than 800 ppm, less than 600 ppm, or even less than 500 ppm, when measured by thermogravimetric analysis according to the weight loss test method described in the experimental section, provide excellent characteristics and performance as to resistance of outgassed components to condensation and/or thermal stability of the corresponding pressure sensitive adhesive. Pressure sensitive adhesives provided with advantageous low fogging characteristics are particularly suited for electronic applications.

Preferably still, the hydrocarbon tackifier(s) for use herein have an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section. In the context of the present disclosure, it has been surprisingly found that a pressure sensitive adhesive comprising a rubber-based elastomeric material and at least one hydrocarbon tackifier, wherein the hydrocarbon tackifier(s) have an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section, provide excellent thermal stability.

Any hydrocarbon tackifiers typically included in conventional pressure-sensitive adhesive compositions may be used in the context of the present disclosure, as long as they fulfill the above-detailed VOC requirements and preferably the above-detailed FOG level requirements too. Useful hydrocarbon tackifiers are typically selected to be miscible with the (co)polymeric material. Suitable hydrocarbon tackifier(s) for use herein may be easily identified by those skilled in the art, in the light of the present disclosure.

Either solid or liquid hydrocarbon tackifiers may be added, although solid hydrocarbon tackifiers are preferred. Solid tackifiers generally have a number average molecular weight (Mw) of 10,000 grams per mole or less and a softening point above about 70°C. Liquid tackifiers are viscous materials that have a softening point of about 0°C to about 20°C.

According to the invention tackifying resins include terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the particular pressure-sensitive adhesive composition. Combinations of various tackifiers can be used if desired, as long as they fulfill the above-detailed VOC requirements and preferably the above-detailed FOG level requirements too.

Tackifiers that are hydrocarbon resins can be prepared from various petroleum-based feed stocks. There feedstocks can be aliphatic hydrocarbons (mainly C5 monomers with some other monomers present such as a mixture of trans-1,3-pentadiene, cis-1,3-pentadiene, 2-methyl-2-butene, dicyclopentadiene, cyclopentadiene, and cyclopentene), aromatic hydrocarbons (mainly C9 monomers with some other monomers present such as a mixture of vinyl toluenes, dicyclopentadiene, indene, methylstyrene, styrene, and methylindenes), or mixtures thereof. Tackifiers derived from C5 monomers are referred to as C5-based hydrocarbon resins while those derived from C9 monomers are referred to as C9-based hydrocarbon resins. Some tackifiers are derived from a mixture of C5 and C9 monomers or are a blend of C5-based hydrocarbon tackifiers and C9-based hydrocarbon tackifiers. These tackifiers can be referred to as C5/C9-based hydrocarbon tackifiers. Any of these resins can be partially or fully hydrogenated to improve their color, their thermal stability or their process compatibility.

The C5-based hydrocarbon resins are commercially available from Eastman Chemical Company under the trade designations PICCOTAC and EASTOTAC, from Cray Valley under the trade designation WINGTACK, from Neville Chemical Company under the trade designation NEVTAC LX, and from Kolon Industries, Inc. under the trade designation HIKOREZ. The C5-based hydrocarbon resins are commercially available from Eastman Chemical with various degrees of hydrogenation under the trade designation EASTOTACK.

The C9-based hydrocarbon resins are commercially available from Eastman Chemical Company under the trade designation PICCO, KRISTLEX, PLASTOLYN, and PICCOTAC, and ENDEX, from Cray Valley under the trade designations NORSOLENE, from Ruetgers N.V. under the trade designation NOVAREZ, and from Kolon Industries, Inc. under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREZ that are 50 to 100 percent (e.g., 50 percent, 70 percent, 90 percent, and 100 percent) hydrogenated. The partially hydrogenated resins typically have some aromatic rings.

Various C5/C9-based hydrocarbon tackifiers are commercially available from Arakawa under the trade designation ARKON, from Zeon under the trade designation QUINTONE, from Exxon Mobil Chemical under the trade designation ESCOREZ, and from Newport Industries under the trade designations NURES and H-REZ (Newport Industries). In the context of the present disclosure, suitable hydrocarbon tackifiers for use herein may be advantageously selected among those C5/C9-based hydrocarbon tackifiers commercially available from Exxon Mobil Chemical under the trade designation ESCOREZ.

According to the invention the hydrocarbon tackifier for use herein is selected from the group consisting of polymeric terpenes, hetero-functional terpenes, coumarone-indene resins, esters of rosin acids, disproportionated rosin acid esters, hydrogenated rosin acids, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and blends thereof wherein the hydrocarbon tackifier has a Volatile Organic Compound (VOC) value less than 1000 ppm.

In an advantageous aspect of the present disclosure, the tackifying resin is selected from the group consisting of C5-based hydrocarbon resins, C9-based hydrocarbon resins, C5/C9-based hydrocarbon resins, and any combinations or mixtures thereof. In another advantageous aspect, the tackifying resin is selected from the group consisting of hydrogenated terpene resins, hydrogenated rosin resins, hydrogenated C5-based hydrocarbon resins, hydrogenated C9-based hydrocarbon resins, hydrogenated C5/C9-based hydrocarbon resins, and any combinations or mixtures thereof.

According to an advantageous aspect, the first pressure sensitive adhesive for use herein comprises a first hydrocarbon tackifier having a Volatile Organic Compound (VOC) value of less than 1000 ppm, when measured by thermogravimetric analysis according to the weight loss test methods described in the experimental section, wherein the first hydrocarbon tackifier has preferably a Tg of at least 60°C, and wherein preferably the first hydrocarbon tackifier is primarily compatible with the rubbery blocks.

In an advantageous aspect, the first hydrocarbon tackifier is primarily compatible with at least some of the rubbery blocks. In some aspects, the first hydrocarbon tackifier is primarily compatible with the rubbery block of the linear block copolymer and each rubbery block of a multi-arm block copolymer.

As used herein, a tackifier is "compatible" with a block if it is miscible with that block. Generally, the miscibility of a tackifier with a block can be determined by measuring the effect of the tackifier on the Tg of that block. If a tackifier is miscible with a block, it will alter (e.g., increase) the Tg of that block. A tackifier is "primarily compatible" with a block if it is at least miscible with that block, although it may also be miscible with other blocks. For example, a tackifier that is primarily compatible with a rubbery block will be miscible with the rubbery block, but may also be miscible with a glassy block.

Generally, resins having relatively low solubility parameters tend to associate with the rubbery blocks; however, their solubility in the glassy blocks tends to increase as the molecular weights or softening points of these resins are lowered.

Exemplary first hydrocarbon tackifiers that are primarily compatible with the rubbery blocks are advantageously selected from the group consisting of polymeric terpenes, hetero-functional terpenes, coumarone-indene resins, rosin acids, esters of rosin acids, disproportionated rosin acid esters, hydrogenated, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and any blends thereof.

According to another advantageous aspect, the first pressure sensitive adhesive for use herein may optionally comprise a second hydrocarbon tackifier having a Volatile Organic Compound (VOC) value of less than 1000 ppm, when measured by thermogravimetric analysis according to the weight loss test methods described in the experimental section, wherein the second hydrocarbon tackifier has preferably a Tg of at least 60°C, and wherein preferably the second hydrocarbon tackifier is primarily compatible with the glassy blocks.

In the context of the present disclosure, it has been surprisingly found that the addition of a second hydrocarbon tackifier which is primarily compatible with the glassy blocks, may advantageously impact the high temperature shear performance of the first pressure sensitive adhesive. The presence of a second hydrocarbon tackifier which is primarily compatible with the glassy blocks may also lead to provide improved adhesion performance in particular on critical substrates, such as e.g. critical paint substrates and critical clear coat systems, in particular automotive critical clear coat systems or critical automotive varnishes.

In a preferred aspect, the second hydrocarbon tackifiers that are primarily compatible with the glassy blocks are advantageously selected from the group consisting of coumarone-indene resins, rosin acids, esters of rosin acids, disproportionated rosin acid esters, C9 aromatics, styrene, alpha-methyl styrene, pure monomer resins and C9/C5 aromatic-modified aliphatic hydrocarbons, and blends thereof.

In some aspects of the first pressure sensitive adhesive for use herein, the first and/or the second hydrocarbon tackifier has a Tg of at least 65°C, or even at least 70°C. In some aspects, both the first and the second hydrocarbon tackifier have a Tg of at least 65°C, or even at least 70°C.

In some aspects of the first pressure sensitive adhesive for use herein, the first and/or the second hydrocarbon tackifier has a softening point of at least about 115°C, or even at least about 120° C. In some aspects, both the first and the second hydrocarbon tackifier have a softening point of at least about 115°C, or even at least about 120°C.

According to a typical aspect of the first pressure sensitive adhesive for use in the present disclosure, the ratio of the total weight of all block copolymers to the total weight of all hydrocarbon tackifiers ranges from 2.4:1 to 1:2.4, from 2.:1 to 1:2., from 1.5:1 to 1:1.5, from 1.2:1 to 1:1.2, from 1.15:1 to 1:1.15, or even from 1.1:1 to 1:1.1.

According to a typical aspect of the first pressure sensitive adhesive, any of the hydrocarbon tackifiers may be used for example in amounts of up to 80 wt%, based on the weight of the pressure sensitive adhesive. In some aspects, the tackifiers can be used in amounts up to 70 wt%, up to 60 wt%, up to 55 wt%, up to 50 wt%, or even up to 45 wt%, based on the weight of the pressure sensitive adhesive. The amount of tackifiers can be for example, in the range of from 5 wt% to 60 wt%, from 5 wt% to 50 wt%, from 10 wt% to 45 wt%, or even from 15 wt% to 45 wt%, based on the weight of the pressure sensitive adhesive.

The first pressure sensitive adhesive for use in the present disclosure further comprises a polymeric plasticizer which is a polyisobutylene having a weight average molecular weight Mw of at least 10.000 g/mol..

The use of polymeric plasticizers having a weight average molecular weight Mw of at least 10.000 g/mol, may advantageously impact the overall shear performance of the first pressure sensitive adhesive, in particular the shear performance at elevated temperature (typically at 70°C). Additionally, polymeric plasticizers having a weight average molecular weight Mw of at least 10.000 g/mol have been found to provide excellent characteristics and performance as to reduction of VOC and FOG levels.

Useful polymeric plasticizers are typically selected to be miscible with the other components in the composition such as the (co)polymeric material and any optional additives. Typical examples of polymeric plasticizers include, but are not limited to, those selected from the group consisting of polyisobutylenes, polyisoprenes, polybutadienes, amorphous polyolefins and copolymers thereof, silicones, polyacrylates, oligomeric polyurethanes, ethylene propylene copolymers, any combinations or mixtures thereof.

Advantageously, the polymeric plasticizer(s) for use herein, have a Volatile Organic Compound (VOC) value of less than 1000 ppm, less than 800 ppm, less than 600 ppm, less than 400 ppm or even less than 200 ppm, when measured by thermogravimetric analysis according to the weight loss test method described in the experimental section.

Advantageously still, the polymeric plasticizer(s) for use herein, have a Volatile Fogging Compound (FOG) value of less than 2500 ppm, less than 2000 ppm, less than 1500 ppm, less than 1000 ppm, less than 800 ppm, less than 600 ppm, or even less than 500 ppm, when measured by thermogravimetric analysis according to the weight loss test method described in the experimental section.

Yet advantageously still, the polymeric plasticizer(s) for use herein, have an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section.

According to an advantageous aspect, the polymeric plasticizer has a weight average molecular weight Mw of at least 20.000 g/mol, at least 30.000 g/mol, or even at least 50.000 g/mol. Advantageously still, the polymeric plasticizer has a weight average molecular weight Mw of 100.000 g/mol or less, less than 90.000 g/mol, less than 80.000 g/mol, less than 70.000 g/mol, or even less than 60.000 g/mol.

The weight average molecular weight Mw of the polymeric plasticizer may be determined by any methods known to the skilled person, for example Gel Permeation Chromatography (GPC) also known as Size Exclusion Chromatography (SEC) or by light scattering techniques. Unless otherwise stated, the weight average molecular weight Mw of the polymeric plasticizers is measured by light scattering according to ASTM D4001-13.

In another advantageous aspect of the first pressure sensitive adhesive for use herein, the polymeric plasticizer has a weight average molecular weight Mw comprised between 30.000 g/mol and 80.000 g/mol or even between 30.000 g/mol and 60.000 g/mol.

According to the invention , the polymeric plasticizer is a polyisobutylene plasticizer. Typical examples of polyisobutylene plasticizers that can be used herein include, but are not limited to, those selected among those commercially available from BASF under the trade designation OPPANOL, in particular OPPANOL B series.

According to a typical aspect, the polymeric plasticizers are used for example in amounts of up to 40 wt%, based on the weight of the pressure sensitive adhesive. In some aspects, the polyisobutylene plasticizers may be used in amounts up to 35 wt%, up to 30 wt%, or up to 25 wt%, based on the weight of the first pressure sensitive adhesive. The amount of polymeric plasticizers can be for example, in the range of from 1 wt% to 40 wt%, from 2 wt% to 30 wt%, or even from 5 wt% to 30 wt%, or even from 5 wt% to 25 wt%, based on the weight of the pressure sensitive adhesive.

According to another typical aspect of the first pressure sensitive adhesive, the total amount of the polymeric plasticizers is of no greater than 20 wt%, no greater than 18 wt%, no greater than 15 wt%, or even no greater than 12 wt%, expressed as a percent by weight based on the total weight of the first pressure sensitive adhesive. In some other aspects, the total amount of the polymeric plasticizers is of no less than 6 wt%, or even no less than 7 wt%, expressed as a percent by weight based on the total weight of the first pressure sensitive adhesive. In still some other aspects, the total amount of the polymeric plasticizers is comprised between 2 and 20 wt%, between 4 and 15 wt%, or even between 6 and 15 wt%, expressed as a percent by weight based on the total weight of the first pressure sensitive adhesive.

In some aspects, the first pressure sensitive adhesive of the present disclosure may further comprise, as an optional ingredient, a filler material. Such fillers may be advantageously used to e.g. increase the mechanical stability of the first pressure sensitive adhesive and may also increase its shear and peel force resistance.

Any filler material commonly known to those skilled in the art may be used in the context of the present disclosure. Typical examples of filler material that can be used herein include, but are not limited to, those selected from the group consisting of expanded perlite, microspheres, expandable microspheres, ceramic spheres, zeolites, clay fillers, glass beads, hollow inorganic beads, silica type fillers, hydrophobic silica type fillers, hydrophilic silica type fillers, fumed silica, fibers, in particular glass fibers, carbon fibers, graphite fibers, silica fibers, ceramic fibers, electrically and/or thermally conducting particles, nanoparticles, in particular silica nanoparticles, and any combinations thereof.

In a typical aspect of the present disclosure, the first pressure sensitive adhesive is free of any filler material selected from the group consisting of microspheres, expandable microspheres, preferably pentane filled expandable microspheres, gaseous cavities, glass beads, glass microspheres, glass bubbles and any combinations or mixtures thereof. More typically, the first pressure sensitive adhesive is free of any filler material selected from the group consisting of expandable microspheres, glass bubbles, and any combinations or mixtures thereof.

When present, the filler material for use herein may be used in the first pressure sensitive adhesive, in any suitable amounts. In some exemplary aspects, the filler material is present in amounts up to 30 parts by weight, up to 25 parts by weight, or even up to 20 parts by weight of the first pressure sensitive adhesive. In some other exemplary aspects, this amount is typically of at least 1 part by weight, or at least 3 parts by weight of the first pressure sensitive adhesive.

Accordingly, in some exemplary aspects, the filler material is present in amounts in a range of from 1 to 20 parts, from 3 to 15 parts by weight, or even from 5 to 13 parts by weight of the first pressure sensitive adhesive. In some other exemplary aspects, the filler material is present in amounts in a range of from 1 to 20 parts, from 2 to 15 parts by weight, or even from 2 to 10 parts by weight of the first pressure sensitive adhesive.

The first pressure sensitive adhesive for use in the present disclosure may further comprise, as an optional ingredient, a crosslinking additive (also referred to as crosslinking agent). A crosslinker may be used to increase the cohesive strength and the tensile strength of the polymeric material. Suitable crosslinking additives for use herein may have multiple (meth)acryloyl groups.

Crosslinkers with multiple (meth)acryloyl groups can be di(meth)acrylates, tri(meth)acrylates, tetra(meth)acrylates, penta(meth)acrylates, and the like. These crosslinkers can be formed, for example, by reacting (meth)acrylic acid with a polyhydric alcohol (i.e., an alcohol having at least two hydroxyl groups). The polyhydric alcohol often has two, three, four, or five hydroxyl groups. Mixtures of crosslinkers may also be used.

In many aspects, the crosslinkers contain at least two (meth)acryloyl groups. Exemplary crosslinkers with two acryloyl groups include, but are not limited to, 1,2-ethanediol diacrylate, 1,3-propanediol diacrylate, 1,9-nonanediol diacrylate, 1,12-dodecanediol diacrylate, 1,4-butanediol diacrylate, 1,6-hexanediol diacrylate, butylene glycol diacrylate, bisphenol A diacrylate, diethylene glycol diacrylate, triethylene glycol diacrylate, tetraethylene glycol diacrylate, tripropylene glycol diacrylate, polyethylene glycol diacrylate, polypropylene glycol diacrylate, polyethylene/polypropylene copolymer diacrylate, polybutadiene di(meth)acrylate, propoxylated glycerin tri(meth)acrylate, and neopentylglycol hydroxypivalate diacrylate modified caprolactone.

Exemplary crosslinkers with three or four (meth)acryloyl groups include, but are not limited to, trimethylolpropane triacrylate (e.g., commercially available under the trade designation TMPTA-N from Cytec Industries, Inc., Smyrna, GA and under the trade designation SR-351 from Sartomer, Exton, PA), trimethylolpropane trimethacrylate (e.g., commercially available under the trade designation SR-350 from Sartomer, Exton, PA), pentaerythritol triacrylate (e.g., commercially available under the trade designation SR-444 from Sartomer), tris(2-hydroxyethylisocyanurate) triacrylate (e.g., commercially available under the trade designation SR-368 from Sartomer), a mixture of pentaerythritol triacrylate and pentaerythritol tetraacrylate (e.g., commercially available from Cytec Industries, Inc., under the trade designation PETIA with an approximately 1:1 ratio of tetraacrylate to triacrylate and under the trade designation PETA-K with an approximately 3:1 ratio of tetraacrylate to triacrylate), pentaerythritol tetraacrylate (e.g., commercially available under the trade designation SR-295 from Sartomer), di-trimethylolpropane tetraacrylate (e.g., commercially available under the trade designation SR-355 from Sartomer), and ethoxylated pentaerythritol tetraacrylate (e.g., commercially available under the trade designation SR-494 from Sartomer). An exemplary crosslinker with five (meth)acryloyl groups includes, but is not limited to, dipentaerythritol pentaacrylate (e.g., commercially available under the trade designation SR-399 from Sartomer).

In some aspects, the crosslinkers are polymeric materials that contains at least two (meth)acryloyl groups. For example, the crosslinkers can be poly(alkylene oxides) with at least two acryloyl groups (e.g., polyethylene glycol diacrylates commercially available from Sartomer such as SR210, SR252, and SR603) or poly(urethanes) with at least two (meth)acryloyl groups (e.g., polyurethane diacrylates such as CN9018 from Sartomer). As the higher molecular weight of the crosslinkers increases, the resulting acrylic copolymer tends to have a higher elongation before breaking. Polymeric crosslinkers tend to be used in greater weight percent amounts compared to their non-polymeric counterparts.

In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE202009013255 U1, EP 2 305 389 A1, EP 2 414 143 A1, EP 2 192 148 A1, EP 2 186 869, EP 0 752 435 A1, EP 1 802 722 A1, EP 1 791 921 A1, EP 1 791 922 A1, EP 1 978 069 A1, and DE 10 2008 059 050 A1. Particularly advantageous crosslinker systems and methods are described in EP 0 752 435 A1 and EP 1 978 069 A1. Suitable accelerants and retardant systems for use herein are described e.g. in the description of US-A1- 2011/0281964. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500. According to a particular aspect, the rubber-based elastomeric material for use herein may comprise (co)polymers or copolymers crosslinkable with epoxide groups. Correspondingly, at least part of the monomers or comonomers used may advantageously be functional monomers crosslinkable with epoxide groups. Monomers with acid groups (especially carboxylic, sulphonic or phosphonic acid groups) and/or hydroxyl groups and/or acid anhydride groups and/or epoxide groups and/or amine groups, in particular monomers containing carboxylic acid groups, may be suitably used. Suitable functional monomers are described e.g. in US 2005/0288436 A1.

The crosslinking additive, if present, may be used for example in amounts of up to 40 wt%, based on the weight of the pressure sensitive adhesive. In some aspects, the crosslinking additive may be used in amounts up to 20 wt%, up to 15 wt%, up to 10 wt%, or up to 5 wt%, based on the weight of the first pressure sensitive adhesive. The amount of crosslinking additive can be for example, in the range of from 0.1 wt% to 10 wt%, from 0.5 wt% to 8 wt%, from 1 wt% to 6 wt%, or even from 2 wt% to 5 wt%, based on the weight of the first pressure sensitive adhesive.

Aside from thermal, moisture or photosensitive crosslinking additives, crosslinking may also be achieved using high energy electromagnetic radiation, such as gamma or e-beam radiation.

In an advantageous aspect of the present disclosure, the crosslinking additive for use herein is activated/activatable with actinic radiation, more preferably with e-beam irradiation. In a more preferred aspect, the crosslinking additive is selected from the group of multifunctional (meth)acrylate compounds. Exemplary multifunctional (meth)acrylate compounds preferably comprise at least two (meth)acryloyl groups, in particular three or four (meth)acryloyl groups, more in particular three (meth)acryloyl groups.

In another advantageous aspect, the multifunctional (meth)acrylate compound has the following Formula:

H₂C=C(R¹)-(CO)-O-R²-[O-(CO)-(R¹)C=CH₂]n

wherein R¹ is hydrogen or methyl; n is 1, 2, 3 or 4; and R² is an alkylene, arylene, heteroalkylene, or any combinations thereof.

According to still another advantageous aspect, the crosslinking additive for use herein is a multifunctional (meth)acrylate compound selected from the group consisting of 1,6-hexanediol di(meth)acrylate, trimethylolpropane tri(meth)acrylate, and any combinations or mixtures thereof.

In a particularly advantageous aspect, the multilayer pressure sensitive adhesive assembly according to the present disclosure is crosslinked, preferably with actinic radiation, more preferably with e-beam irradiation. According to one preferred aspect, the multilayer pressure sensitive adhesive assembly is crosslinked with e-beam irradiation, wherein the e-beam irradiation dose is preferably comprised between 50 kGy and 150 kGy. In a further particular aspect, the e-beam irradiation is performed from both sides so as to achieve a symmetric irradiation profile within the multilayer pressure sensitive adhesive assembly.

In the context of the present disclosure, it has been surprisingly found that crosslinking the multilayer pressure sensitive adhesive assembly as described above, in particular with actinic radiation, and preferably with e-beam irradiation, provides a multilayer pressure sensitive adhesive assembly characterized with excellent static shear performance both at room temperature and high temperature (e.g. 70°C or even 90°C).

While performing e-beam irradiation based crosslinking, finding suitable e-beam irradiation dose in conjunction with selecting suitable e-beam acceleration tension will be well within the practice of those skilled in the art. Suitable acceleration tensions are typically selected and adapted to the coating weight of the corresponding multilayer pressure sensitive adhesive assembly. Exemplary e-beam acceleration tensions are typically comprised between 140 and 300 kV for pressure sensitive adhesive layers with a coating weight between 25 and 1200g/m². When irradiated from both sides, the pressure sensitive adhesive layers may have a coating weight up to 1800g/m².

Advantageously, the multilayer pressure sensitive adhesive assembly of the present disclosure may be crosslinked using an e-beam irradiation dose comprised between 50 kGy and 150 kGy.

According to one particular aspect of the multilayer pressure sensitive adhesive assembly according to the present disclosure, the first pressure sensitive adhesive comprises:
a) from 20 wt% to 80 wt%, from 20 wt% to 70 wt%, from 25 wt% to 60 wt%, or even from 25 wt% to 50 wt% of the multi-arm block copolymer, based on the weight of the pressure sensitive adhesive;
b) from 20 wt% to 70 wt%, from 25 wt% to 60 wt%, or even from 25 wt% to 50 wt% of the hydrocarbon tackifier(s), based on the weight of the pressure sensitive adhesive;
c) from 2 wt% to 20 wt%, from 4 wt% to 15 wt%, or even from 6 wt% to 15 wt% of the polymeric plasticizer, based on the weight of the pressure sensitive adhesive;
d) optionally, from 3 wt% to 40 wt%, from 5 wt% to 30 wt%, or even from 10 wt% to 25 wt% of linear block copolymer, based on the weight of the pressure sensitive adhesive; and
e) optionally, from 0.1 wt% to 10 wt%, from 0.5 wt% to 8 wt%, from 1 wt% to 6 wt%, or even from 2 wt% to 5 wt% of a crosslinking additive, based on the weight of the pressure sensitive adhesive foam, and wherein the crosslinking additive is preferably selected from the group of multifunctional (meth)acrylate compounds.

As will be apparent to those skilled in the art in the light of the present disclosure, other additives may optionally be included in the first pressure sensitive adhesive to achieve any desired properties. Such additives include, but are not limited to, further tackifiers, pigments, toughening agents, reinforcing agents, fire retardants, antioxidants, polymerization initiators, and various stabilizers. The additives are typically added in amounts sufficient to obtain the desired end properties.

The multilayer pressure sensitive adhesive assembly of the present disclosure comprises a polymeric foam layer and a first pressure sensitive adhesive layer, as described above, adjacent to the polymeric foam layer. However, the multilayer pressure sensitive adhesive assembly according to the present disclosure may have a design or configuration of any suitable kind, depending on its ultimate application and the desired properties, and provided it comprises a first pressure sensitive adhesive layer as described above and a polymeric foam layer.

According to an exemplary aspect, the multilayer pressure sensitive adhesive assembly of the present disclosure may take the form of a multilayer construction comprising two or more superimposed layers, i.e. the first pressure sensitive adhesive layer, the polymeric foam layer and optionally, adjacent layers such as e.g. further pressure sensitive adhesive layers and/or a backing layer. Such adhesive multilayer constructions or tapes may be advantageously used as a dual-layer adhesive tape to adhere two objects to one another. In that context, suitable polymeric foam layers or backing layers for use herein may or may not exhibit at least partial pressure sensitive adhesive characteristics.

Accordingly, in one particular aspect, the multilayer pressure sensitive adhesive assembly according to the present disclosure comprises a polymeric foam having a first major surface and a second major surface; and a first pressure sensitive adhesive layer as described above bonded to the first major surface of the polymeric foam layer.

According to an advantageous aspect of the multilayer pressure sensitive adhesive assembly, the first pressure sensitive adhesive layer for use herein has a thickness of less than 1500 µm, less than 1000 µm, less than 800 µm, less than 600 µm, less than 400 µm, less than 200 µm, less than 150 µm, or even less than 100 µm. Advantageously still, the first pressure sensitive adhesive layer for use herein has a thickness comprised between 20 and 1500 µm, between 20 and 1000 µm, between 20 and 500 µm, between 30 and 400 µm, between 30 and 250 µm, between 40 and 200 µm, or even between 50 and 150 µm.

According to a typical aspect of the multilayer pressure sensitive adhesive assembly, the polymeric foam layer for use herein has for example a thickness comprised between 100 and 6000 µm, between 200 and 4000 µm, between 400 and 3000 µm, between 500 and 2000 µm, or even between 800 and 1500 µm. As will be apparent to those skilled in the art, in the light of the present description, the preferred thickness of the polymeric foam layer will be dependent on the intended application.

The thickness of the various pressure sensitive adhesive layer(s) and other optional layer(s) comprised in the pressure sensitive adhesive assembly may vary in wide ranges depending on the desired execution and associated properties. By way of example, the thickness can be independently chosen for each layer between 25 µm and 6000 µm, between 40 µm and 3000 µm, between 50 µm and 3000 µm, between 50 µm and 2000 µm, or even between 50 µm and 1500 µm.

According to the particular execution wherein the multilayer pressure sensitive adhesive assembly takes the form of skin/core type multilayer pressure sensitive adhesive assembly, wherein the polymeric foam layer is the core layer of the multilayer pressure sensitive adhesive assembly and the first pressure sensitive adhesive layer is the skin layer of the multilayer pressure sensitive adhesive assembly, it is preferred that the first pressure sensitive adhesive layer has a lower thickness compared to the polymeric foam /core layer.

As a way of example, the thickness of the pressure sensitive adhesive layer may typically be in the range from 20 µm to 250 µm, or even from 40 µm to 200 µm, whereas the thickness of the polymeric foam layer may typically be in the range from 100 µm to 6000 µm, from 400 µm to 3000 µm, or even from 800 µm to 2000 µm. Such multilayer pressure sensitive adhesive assemblies typically exhibit high peel adhesion. Without wishing to be bound by theory, it is believed such high peel adhesion is caused by a stabilizing effect of the relatively thick polymeric foam layer compared to the first pressure sensitive adhesive layer.

In some other executions, the multilayer pressure sensitive adhesive assembly further comprises a second pressure sensitive adhesive skin layer bonded to the second major surface of the polymeric foam layer, and wherein the multilayer pressure sensitive adhesive assembly is preferably obtained by hotmelt co-extrusion of the polymeric foam layer, the first pressure sensitive adhesive layer and the second pressure sensitive adhesive layer. Such a multilayer pressure sensitive adhesive assembly reflects a three-layer design, in which the polymeric foam layer is sandwiched between e.g. two pressure sensitive adhesive layers. In some aspects of the multilayer pressure sensitive adhesive assembly, the first pressure sensitive adhesive layer and the second pressure sensitive adhesive layer are the same adhesive, and comprise a pressure sensitive adhesive composition as described above. In some alternative aspects, the first pressure sensitive adhesive layer and the second pressure sensitive adhesive layer each independently comprise a pressure sensitive adhesive composition as described above.

In some executions, the multilayer pressure sensitive adhesive assembly according to the present disclosure may advantageously be in the form of a skin/core/skin multilayer assembly, wherein the polymeric foam layer is the core layer of the multilayer pressure sensitive adhesive assembly, and the skin layers are the first pressure sensitive adhesive layer and the second pressure sensitive adhesive layer.

The multilayer pressure sensitive adhesive assembly of the present disclosure comprises a polymeric foam layer adjacent to the first pressure sensitive adhesive layer. Any commonly known polymeric foam and material for forming a polymeric foam may be used in the context of the present disclosure. Suitable polymeric foams and materials for forming a polymeric foam for use herein may be easily identified by those skilled in the art, in the light of the present disclosure.

In the context of the present disclosure, the term "polymeric foam" is meant to designate a material based on a polymer and which material comprises voids, typically in an amount of at least 5% by volume, typically from 10% to 80% by volume or from 10% to 65% by volume. The voids may be obtained by any of the known methods such as cells formed by gas. Alternatively, the voids may result from the incorporation of hollow fillers, such as hollow polymeric particles, hollow glass microspheres, hollow ceramic microspheres. According to another alternative aspect, the voids may result from the incorporation of heat expandable microspheres, preferably pentane filled expandable microspheres. The heat expandable microspheres for use herein may be expanded when the polymer melt passes an extrusion die. Polymer mixtures containing expandable microspheres may also be extruded at temperatures below their expansion temperature and expanded in a later step by exposing the tape to temperatures above the expansion temperature of the microspheres. Alternatively, the voids can result from the decomposition of chemical blowing agents.

A polymeric foam layer typically has a density comprised between 0.30 g/cm³ and 1.5 g/cm³, between 0.35 g/cm³ and 1.10 g/cm³, or even between 0.40 g/cm³ and 0.95 g/cm³.This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or incorporation of hollow fillers, such as hollow polymeric particles, hollow glass microspheres, hollow ceramic microspheres or expandable microspheres, preferably pentane filled expandable microspheres, into the composition for the polymeric foam layer.

In some aspects the polymeric foam layer has viscoelastic properties at room temperature. In some other aspects, the foam may comprise a thermoplastic foam. In some other aspects, the foam may comprise a thermoset foam. Exemplary foams are also described in, e.g., the *Handbook of Polymer Foams,* David Eaves, editor, published by Shawbury, Shrewsbury, Shropshire, UK : Rapra Technology, 2004.

Multilayer pressure sensitive adhesive assemblies comprising a polymeric foam layer, are particularly advantageous when compared to single-layer pressure sensitive adhesives, in that adhesion (quick adhesion) can be adjusted by the formulation of the pressure sensitive adhesive layer(s) (also commonly referred to as the skin layer(s)), while other properties/requirements of the overall assembly such as application issues, deforming issues and energy distribution may be addressed by appropriate formulation of the polymeric foam layer (also commonly referred to as the core layer).

According to a typical aspect of the multilayer pressure sensitive adhesive assembly, the polymeric foam layer comprises a polymer base material selected from the group consisting of rubber-based elastomeric materials, polyacrylates, polyurethanes, polyolefins, polyamines, polyamides, polyesters, polyethers, polyisobutylene, polystyrenes, polyvinyls, polyvinylpyrrolidone, and any combinations, copolymers, block copolymers or mixtures thereof.

In an advantageous aspect, the polymeric foam layer comprises a polymer base material selected from the group consisting of rubber-based elastomeric materials. Advantageously, the rubber-based elastomeric material is selected from the group consisting of natural rubbers, synthetic rubbers, thermoplastic elastomeric materials, non-thermoplastic elastomeric materials, thermoplastic hydrocarbon elastomeric materials, non-thermoplastic hydrocarbon elastomeric materials, and any combinations or mixtures thereof.

In some aspects of the multilayer pressure sensitive adhesive assembly, the rubber-based elastomeric material is selected from the group consisting of halogenated butyl rubbers, in particular bromobutyl rubbers and chlorobutyl rubbers; halogenated isobutylene-isoprene copolymers; bromo-isobutylene-isoprene copolymers; chloro-isobutylene-isoprene copolymers; block copolymers; olefinic block copolymers; butyl rubbers; synthetic polyisoprene; ethylene-octylene rubbers; ethylene-propylene rubbers; ethylene-propylene random copolymers; ethylene-propylene-diene monomer rubbers; polyisobutylenes; poly(alpha-olefin); ethylene-alpha-olefin copolymers; ethylene-alpha-olefin block copolymers; styrenic block copolymers; styrene-isoprene-styrene block copolymers; styrene-butadiene-styrene block copolymers; styrene-ethylene-butylene-styrene block copolymers; styrene-ethylene-propylene-styrene block copolymers; styrene-butadiene random copolymers; olefinic polymers and copolymers; ethylene-propylene random copolymers; ethylene-propylene-diene terpolymers, and any combinations or mixtures thereof.

In some preferred aspects, the rubber-based elastomeric material is selected from the group consisting of styrenic block copolymers, and any combinations or mixtures thereof. In a more preferred aspect of the multilayer pressure sensitive adhesive assembly, the rubber-based elastomeric material is selected from the group consisting of styrene-isoprene-styrene block copolymers, styrene-butadiene-styrene block copolymers, styrene-ethylene-butylene-styrene block copolymers, and any combinations or mixtures thereof.

In a still preferred aspect, the rubber-based elastomeric material is selected from the group consisting of styrene-isoprene-styrene block copolymers, styrene-butadiene-styrene block copolymers, and any combinations or mixtures thereof.

In some typical aspects, the polymeric foam layer further comprises at least one filler material which is preferably selected from the group consisting of microspheres; expandable microspheres, preferably pentane filled expandable microspheres; gaseous cavities; glass beads; glass microspheres; glass bubbles and any combinations or mixtures thereof; more preferably from the group consisting of expandable microspheres, glass bubbles, and any combinations or mixtures thereof. Preferably, the at least one filler material is selected from the group consisting of expandable microspheres, glassbubbles, and any combinations or mixtures thereof.

In one particular aspect of the multilayer pressure sensitive adhesive assembly according to the present disclosure, the polymeric foam layer has a composition identical to the first and/or second pressure sensitive adhesive as described above, and further comprises a filler material selected from the group consisting of expandable microspheres, glass bubbles, and any combinations or mixtures thereof.

In some particular aspects of the multilayer pressure sensitive adhesive assembly according to the disclosure, a primer layer may be interposed between the pressure sensitive adhesive layer(s) and the polymeric foam (or core) layer. In the context of the present disclosure, any primer compositions commonly known to those skilled in the art may be used. Finding appropriate primer compositions is well within the capabilities of those skilled in the art, in the light of the present disclosure. Useful primers for use herein are described e.g. in U.S. Patent No. 5,677,376 (Groves) and U.S. Patent No. 5,605,964 (Groves).

According to a particularly advantageous aspect, the multilayer pressure sensitive adhesive assembly as described above, has a Volatile Organic Compound (VOC) value of less than 2000 ppm, less than 1500 ppm, less than 1000 ppm, less than 800 ppm, less than 600 ppm, less than 500 ppm, less than 400 ppm, or even less than 300 ppm, when measured by thermogravimetric analysis according to the weight loss test method described in the experimental section.

Advantageously still, the multilayer pressure sensitive adhesive assembly according to the present disclosure has a Volatile Organic Compound (VOC) value of less than 2000 ppm, less than 1500 ppm, less than 1000 ppm, less than 800 ppm, less than 600 ppm, less than 500 ppm, less than 400 ppm, or even less than 300 ppm, when measured by thermal desorption analysis according to test method VDA278 (Thermal Desorption Analysis of Organic Emissions for the Characterization of Non-Metallic Materials for Automobiles) from VDA, Association of the German Automobile Industry.

Advantageously still, the multilayer pressure sensitive adhesive assembly has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, or even less than 400 ppm, when measured by thermogravimetric analysis according to the weight loss test method described in the experimental section.

Advantageously still, the multilayer pressure sensitive adhesive assembly has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, or even less than 400 ppm, when measured by thermal desorption analysis according to test method VDA278 (Thermal Desorption Analysis of Organic Emissions for the Characterization of Non-Metallic Materials for Automobiles) from VDA, Association of the German Automobile Industry.

According to another advantageous execution, the multilayer pressure sensitive adhesive assembly has a static shear strength value of more than 2000 min, more than 4000 min, more than 6000 min, more than 8000 min, or even more than 10000 min, when measured at 70°C according to the static shear test method described in the experimental section.

According to still another advantageous execution, the multilayer pressure sensitive adhesive assembly as described above has a static shear strength value of more than 2000 min, more than 4000 min, more than 6000 min, more than 8000 min, or even more than 10000 min, when measured at 90°C according to the static shear test method described in the experimental section.

The multilayer pressure sensitive adhesive assembly of the present disclosure is obtained by hotmelt co-extrusion. Hotmelt co-extrusion is a technique well known to those skilled in the art. Exemplary hotmelt co-extrusion processes are described e.g. in US 2003/0082362 A1 (Khandpur et al.), in US 2004/0082700 A1 (Khandpur et al.).

Hotmelt co-extrusion process typically involves forming a hotmelt composition, generally a polymer or blended polymeric material with a melt viscosity profile such that it can be extrusion coated on a substrate or carrier in a thin layer at a process temperature significantly above normal room temperature, but retains useful pressure-sensitive adhesive characteristics at room temperature.

A multilayer pressure sensitive adhesive assembly of the present disclosure may typically be manufactured by hotmelt co-extrusion of the polymeric foam layer, the first pressure sensitive adhesive layer, and optionally, the second pressure sensitive adhesive layer. Exemplary processes typically involve compounding the various ingredients of each layer to a hotmelt compound. (such as e.g. block copolymers, polymeric plasticizers and hydrocarbon tackifiers). As well known in the art, compounding is typically performed in roll milling or in an extruder (such as e.g., single. screw, twin screw, planetary extruder, ring extruder, disk screw, reciprocating single screw, pin barrel single screw, etc.). Commercially available equipment such as kneaders or mixers may also be used to compound batches of the adhesive compositions. After compounding, the various prepared compositions are coextruded through a coextrusion die into a desired multilayer assembly. The processing of the multilayer extrudate is continued through a calender or another type of coating equipment, Because of the tacky behavior of the adhesive it is coated on a liner and the rolls are coated with materials which do not stick to the extruded adhesive.

Accordingly, in another aspect of the present disclosure, it is provided a method of manufacturing a multilayer pressure sensitive adhesive assembly as described above, which comprises the step of hotmelt co-extruding the polymeric foam layer, the first pressure sensitive adhesive layer, and optionally, the second pressure sensitive adhesive layer.

In a more particular aspect, the present disclosure is directed to a method of manufacturing a multilayer pressure sensitive adhesive assembly as described above, which comprises the steps of:
a) compounding the multi-arm block copolymer, the polyisobutilene plasticizer, the at least one hydrocarbon tackifier; optionally, the linear block copolymer, optionally, a crosslinking agent which is preferably selected from the group of multifunctional (meth)acrylate compounds;; thereby forming a hotmelt compound of the first pressure sensitive adhesive layer;
b) providing a hotmelt compound of the polymeric foam layer;
c) providing a hotmelt compound of the second pressure sensitive adhesive layer;
d) hotmelt co-extruding the polymeric foam layer, the first pressure sensitive adhesive layer, and optionally, the second pressure sensitive adhesive layer thereby forming a hotmelt co-extruded multilayer pressure sensitive adhesive assembly; and
e) optionally, crosslinking the hotmelt co-extruded multilayer pressure sensitive adhesive assembly obtained in step d), preferably with actinic radiation, more preferably with e-beam irradiation.

According to one exemplary aspect method of manufacturing a multilayer pressure sensitive adhesive assembly, the hotmelt of the polymeric foam layer comprises a filler material selected from the group consisting of expandable microspheres, expanded microspheres, glass bubbles, any combinations or mixtures thereof. According to this particular execution, the method of manufacturing a multilayer pressure sensitive adhesive assembly may optionally comprise the step of allowing the expandable microspheres to expand or further expand.

In a particular aspect, the method of manufacturing a multilayer pressure sensitive adhesive assembly comprises a multi screw, preferably twin screw hotmelt extrusion processing step.

According to an advantageous aspect of the method of manufacturing a multilayer pressure sensitive adhesive assembly, the hydrocarbon tackifier(s) and/or the polymeric plasticizer(s), are exposed to minimal heat stress prior to their feeding into the compounding medium. In the context of the present disclosure, it has been indeed found that heat stress at elevated temperatures applied to the hydrocarbon tackifier(s) and/or the polymeric plasticizer(s), for a long period of time may lead to an accelerated thermal and/or oxidative degradation of these ingredients and to the generation of VOCs.

Accordingly, in a preferred aspect of the method of manufacturing a multilayer pressure sensitive adhesive assembly, the hydrocarbon tackifier(s) and the polymeric plasticizer(s), are added into the compounding medium with a drum unloader as feeding equipment.

Alternatively, the hydrocarbon tackifier(s) and/or the polymeric plasticizer(s), are fed into the compounding medium with a single screw feeding extruder. Alternatively still, the hydrocarbon tackifier(s) and/or the polymeric plasticizer(s), are fed to the compounding medium with a kneading equipment having a discharge screw.

According to another advantageous aspect of the method of manufacturing a multilayer pressure sensitive adhesive assembly, the hydrocarbon tackifier(s) and/or the polymeric plasticizer(s) are added into the compounding medium in a solid state by means of volumetric or gravimetric feeders.

In some particular aspects, vacuum is applied to the compounded adhesive melt during the extrusion process. Vacuum can indifferently be applied to the skin compound melt and/or to the core compound melt prior to adding the foaming agent.

According to another exemplary aspect of the method of manufacturing a multilayer pressure sensitive adhesive assembly, a chemical entrainer is added to the compounded adhesive melt and removed later in the extrusion process. Suitable entrainers for use herein are liquids, gases or compounds that release a volatile chemical substance under the action of heat. Advantageously, the used entrainer is capable of entraining further volatiles or last traces of volatiles. Suitable entrainers can be added to the skin PSA melt and or to the core melt and removed later in the extrusion process. In case the entrainer is added to the core compound, the latter is preferably removed before adding the foaming agent.

In another particular aspect, the method of manufacturing a multilayer pressure sensitive adhesive assembly comprises the step of crosslinking the hotmelt co-extruded multilayer pressure sensitive adhesive assembly obtained in step d) with actinic radiation, preferably with e-beam irradiation, whereby the actinic radiation crosslinking step is applied under any of closed face (CF) or open face (OF) conditions.

According to the "closed face" irradiation method, one or both faces of the hotmelt co-extruded multilayer pressure sensitive adhesive assembly obtained in step d) are covered with a liner and the irradiation dose is applied through the liner(s).

According to the "open face" irradiation method, one or both faces of the hotmelt co-extruded multilayer pressure sensitive adhesive assembly obtained in step d) are exposed (i.e. not covered with a liner) and the irradiation dose is applied directly on the exposed adhesive surface(s).

Typically, the hotmelt co-extruded multilayer pressure sensitive adhesive assembly is deposited on a substrate and then post cured, preferably with actinic radiation, more preferably with e-beam radiation.

In the context of manufacturing a multilayer pressure sensitive adhesive assembly, the various layers of the multilayer pressure sensitive adhesive assembly are prepared as part of a single process step.

The multilayer pressure sensitive adhesive assembly of the present disclosure can be coated/applied upon a variety of substrates to produce adhesive-coated articles. The substrates can be flexible or inflexible and be formed of a polymeric material, paper, glass or ceramic material, metal, or combinations thereof. Suitable polymeric substrates include, but are not limited to, polymeric films such as those prepared from polypropylene, polyethylene, polyvinyl chloride, polyester (polyethylene terephthalate or polyethylene naphthalate), polycarbonate, polyurethane, polymethyl(meth)acrylate (PMMA), polyurethane acrylates, cellulose acetate, cellulose triacetate, ethyl cellulose, nonwovens (e.g., papers, cloths, nonwoven scrims), and metal foils. Foam backings may be used. Examples of other substrates include, but are not limited to, metal such as stainless steel, metal or metal oxide coated polymeric material, metal or metal oxide coated glass, and the like.

The multilayer pressure sensitive adhesive assemblies of the present disclosure may be used in any conventionally known article such as labels, tapes, signs, covers, marking indices, display components, touch panels, and the like. Flexible backing materials having microreplicated surfaces are also contemplated. The substrate to which the multilayer pressure sensitive adhesive assembly may be applied is selected depending on the particular application. For example, the multilayer pressure sensitive adhesive assembly may be applied to sheeting products (e.g., decorative graphics and reflective products), label stock, and tape backings. Additionally, the multilayer pressure sensitive adhesive assembly may be applied directly onto other substrates such as a metal panel (e.g., automotive panel) or a glass window so that yet another substrate or object can be attached to the panel or window. Accordingly, the multilayer pressure sensitive adhesive assembly of the present disclosure may find a particular use in the automotive manufacturing industry (e.g. for attachment of exterior trim parts or for weatherstrips), in the construction industry, in the solar panel construction industry, or in the electronic industry (e.g. for the fixation of displays in mobile hand held devices)

As such, the multilayer pressure sensitive adhesive assemblies according to the present disclosure are particularly suited for (industrial) interior applications, more in particular for construction market applications, automotive applications or electronic applications. In the context of automotive applications, the multilayer pressure sensitive adhesive assemblies as described herein may find particular use for adhering e.g. automotive body side mouldings, weather strips or rearview mirrors. The multilayer pressure sensitive adhesive assemblies according to the present disclosure are particularly suitable for adhesion to substrates/panels painted with automotive paint systems comprising a base electrocoat or a pigmented basecoat, and in particular to clear coat surfaces, in particular clear coats for automotive vehicles. The multilayer pressure sensitive adhesive assemblies according to the present disclosure are particularly suited for adhesion to low energy surfaces, such as polypropylene, polyethylene or copolymers thereof.

Accordingly, the present disclosure is further directed to the use of a multilayer pressure sensitive adhesive assembly as described above for industrial applications, preferably for interior (industrial) applications, more preferably for construction market applications, automotive applications or electronic applications.

In some aspects, the multilayer pressure sensitive adhesive assembly according to the present disclosure may be particularly useful for forming strong adhesive bonds to low surface energy (LSE) substrates.

However, the use of these multilayer pressure sensitive adhesive assemblies is not limited to low surface energy substrates. The multilayer pressure sensitive adhesive assemblies may, in some aspects, surprisingly bond well to medium surface energy (MSE) substrates. Included among such materials are polyamide 6 (PA6), acrylonitrile butadiene styrene (ABS), PC/ABS blends, PC, PVC, PA, polyurethane, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

Accordingly, the present disclosure is further directed to the use of a multilayer pressure sensitive adhesive assembly as above described for the bonding to a low surface energy substrate and/or a medium surface energy substrate.

The multilayer pressure sensitive adhesive assembly may also be provided as a single coated or double coated tape in which the multilayer pressure sensitive adhesive assembly is disposed on a permanent backing. Backings can be made from plastics (e.g., polypropylene, including biaxially oriented polypropylene, vinyl, polyolefin such as polyethylene, polyurethanes, polyurethane acrylates, polyesters such as polyethylene terephthalate), nonwovens (e.g., papers, cloths, nonwoven scrims), metal foils, foams (e.g., polyacrylic, polyethylene, polyurethane, neoprene), and the like. Polymeric foams are commercially available from various suppliers such as 3M Co., Voltek, Sekisui, and others.

### EXAMPLES

The present disclosure is further illustrated by the following examples. These examples are merely for illustrative purposes only and are not meant to be limiting on the scope of the appended claims.

### Test Methods applied:

### TGA test method

The TGA (Thermogravimetric Analysis) measurements are performed with a Q5000 IR equipment from Texas Instruments. The samples are weighed in a platinum pan and placed with an auto sampler in the oven of the apparatus. The nitrogen flow through the oven is 25mL/min, the nitrogen flow through the balance is 10mL/min. The temperature is equilibrated at 30°C and is held for 15 minutes. Then the temperature is increased to 90°C with a ramp of 60°C/min. The 90°C are then held for 30 minutes. In a next step, the temperature is increased to 120°C with a ramp of 60°C/min. The 120°C are held for 60 minutes. The weight losses during 30 minutes at 90°C (VOC analysis) and during 60 minutes at 120°C (FOG analysis) are recorded.

The test is then completed by increasing the temperature to 800°C with a ramp of 10°C/min. Then, the temperature is equilibrated at 600°C, the oven is purged with air and the temperature is increased to 900°C with a ramp of 10°C/min.

### Oven Outgassing test method

A measure for the outgassing of raw material samples is accomplished by weighing 10g of the selected raw material into an aluminum cup with a precision of 0.1 mg. Prior to this step, the aluminum cup is already weighed out with a precision in the range of 0.1 mg. The weighed-in test sample is then placed into a forced air oven for 2 hours at 120°C or 2 hours at 160°C. Once the sample is removed from the oven, it is allowed to cool at ambient temperature (23°C +/- 2°C) for 30 minutes before weighing the filled aluminum cup again. The weight loss of the sample before and after oven drying is calculated and recorded in %.

### Thermal desorption analysis of organic emissions according to VDA test method 278

VDA method 278 is a test method used for the determination of organic emissions from non-metallic trim components used to manufacture the interior of motor vehicles (VDA stands for "Verband der Automobilindustrie", the German Association of Automobilists). The method classifies the emitted organic compounds into two groups:
VOC value - the sum of volatile and semi-volatile compounds up to n-C₂₅ and
FOG value - the sum of the semi-volatile and heavy compounds from n-C₁₄ to n-C₃₂

For measuring the VOC and FOG values, adhesive samples of 30mg +/- 5mg are weighed directly into empty glass sample tubes. The volatile and semi-volatile organic compounds are extracted from the samples into the gas stream and are then re-focused onto a secondary trap prior to injection into a GC for analysis. An automated thermal desorber (Markes International Ultra-UNITY system) is hereby used for the VDA 278 testing.

The test method comprises two extraction stages:
- VOC analysis, which involves desorbing the sample at 90°C for 30 minutes to extract VOC's up to n-C₂₅. This is followed by a semi-quantitative analysis of each compound as µg toluene equivalents per gram of sample.
- FOG analysis, which involves desorbing the sample at 120°C for 60 minutes to extract semi-volatile compounds ranging from n-C₁₄ to n-C₃₂. This is followed by semi-quantitative analysis of each compound as µg hexadecane equivalents per gram of sample.

The VOC values expressed are the average of two measurements per sample. The higher value of the measurements is indicated as the result, as described in the VDA278 test method. In order to determine the FOG value, the second sample is retained in the desorption tube after the VOC analysis and reheated to 120 °C for 60 minutes.

### 90°-Peel-test at 300 mm/min (according to FINAT Test Method No. 2, 8th edition 2009)

Multilayer pressure sensitive adhesive assembly strips according to the present disclosure and having a width of 10 mm and a length > 120 mm are cut out in the machine direction from the sample material.

For test sample preparation the liner is first removed from the one adhesive side and placed on an aluminum strip having the following dimension 22 × 1.6 cm, 0.13 mm thickness. Then, the adhesive coated side of each PSA assembly strip is placed, after the liner is removed, with its adhesive side down on a clean test panel using light finger pressure. Next, the test samples are rolled twice with a standard FINAT test roller (weight 6.8 kg) at a speed of approximately 10 mm per second to obtain intimate contact between the adhesive mass and the surface. After applying the pressure sensitive adhesive assembly strips to the test panel, the test samples are allowed to dwell for 24h at ambient room temperature (23°C +/- 2°C, 50% relative humidity +/-5%) prior to testing.

For peel testing the test samples are in a first step clamped in the lower movable jaw of a Zwick tensile tester (Model Z020 commercially available from Zwick/Roell GmbH, Ulm, Germany). The multilayer pressure sensitive adhesive film strips are folded back at an angle of 90° and their free ends grasped in the upper jaw of the tensile tester in a configuration commonly utilized for 90° measurements. The tensile tester is set at 300 mm per minute jaw separation rate. Test results are expressed in Newton per 10 mm (N/10 mm). The quoted peel values are the average of two 90°-peel measurements.

### Static Shear-Test @ RT with 500g (according to FINAT Test Method 8, 8th edition 2009)

The test is carried out at ambient room temperature (23 °C +/- 2°C and 50% +/- 5% relative humidity). Test specimens are cut out having a dimension of 12.7 mm by 25.4 mm. The liner is then removed from one side of the test specimen and the adhesive is adhered onto to an aluminum plate having the following dimension 25.4 × 50 × 1mm thickness and comprising a hole for the weight. The second liner is thereafter removed from the test specimen and the small panel with the test specimen is applied onto the respective test panel (stainless steel) having the following dimensions: 50mm × 50mm × 2mm at the short edge.

Next, the test samples are rolled twice with a standard FINAT test roller (weight 6.8 kg) at a speed of approximately 10 mm per second to obtain intimate contact between the adhesive mass and the surface. After applying the pressure sensitive adhesive assembly strips to the test panel, the test samples are allowed to dwell for 24h at ambient room temperature (23°C +/- 2°C, 50% relative humidity +/-5%) prior to testing.

Each sample is then placed into a vertical shear-stand (+2° disposition) with automatic time logging and a 500g weight is then hung into the hole of the aluminum plate. The time until failure is measured and recorded in minutes. Target value is 10.000 minutes. Per test specimen two samples are measured. A recorded time of "10000+" indicates that the adhesive does not fail after 10000 min.

### Static shear test @ 70 °C or 90°C with 500g (FINAT Test Method No. 8, 8th edition 2009)

The test is carried out at 70°C or 90°C. Test specimens are cut out having a dimension of 12.7 mm by 25.4 mm. The liner is then removed from one side of the test specimen and the adhesive is adhered onto to an aluminum plate having the following dimension 25.4 ×50×1 mm thickness and comprising a hole for the weight. The second liner is thereafter removed from the test specimen and the small panel with the test specimen is applied onto the respective test panel (stainless steel) having the following dimensions: 50mm × 50mm × 2mm at the short edge.

Next, the test samples are rolled twice with a standard FINAT test roller (weight 6.8 kg) at a speed of approximately 10 mm per second to obtain intimate contact between the adhesive mass and the surface. After applying the pressure sensitive adhesive assembly strips to the test panel, the test samples are allowed to dwell for 24h at ambient room temperature (23°C +/- 2°C, 50% relative humidity +/-5%) prior to testing.

Each sample is then placed into a vertical shear-stand (+2° disposition) at 70°C or 90°C with automatic time logging. After 10 minutes dwell time in the oven, a 500g weight is hung into the hole of the aluminum plate. The time until failure is measured and recorded in minutes. Target value is 10.000 minutes. Per test specimen two samples are measured. A recorded time of "10000+" indicates that the adhesive does not fail after 10000 min.

### Test Substrates used for testing:

The multilayer pressure sensitive adhesive adhesives and assemblies according to the present disclosure are tested for their adhesive properties on following substrates:
- PP: polypropylene plate ("Kunststoffprüfkörper PP nature"; Fabrikat Simona HWST; 150cm × 50 × 2 mm), available from Rocholl GmbH, Aglatershausen, Germany.

Prior to testing, the PP substrates are cleaned as follows:
The PP panels are cleaned first with a dry tissue applied with gentle force to remove any residuals / waxy compounds on the surface and then cleaned with a mixture of isopropyl alcohol: distilled water (1:1) and dried with a tissue.

The adhesive tests are further also carried out on the following automotive clear coat panels:
- **UreGloss** clear coat coated panels available from BASF Coatings.
- **CeramiClear5 ("CC5")** coated panels available from PPG Industries.

The upper listed automotive clear coats include acrylic resins and polyesters used alone or with mixtures of copolymers comprising hydroxy- or glycidyl-functionalities or carbamatic acid residues (groups); or copolymers of acrylic acid and methacrylic acid esters with hydroxyl groups, free acid groups and further co-monomers (e.g. styrene). Panels are cut prior to 90 °peel and shear testing to the requested dimension.

Before testing, the automotive clear coat coated panels are cleaned with a 1:1 mixture of isopropylalcohol and distilled water. Test panels are then wiped dry with a paper tissue.

### Raw materials used:

The raw materials and commercial adhesive tapes used are summarized in Table 1 below.

**Table 1: Raw material list.**

| Name | Description | Supplier |
|---|---|---|
| ACX 7065 | Black Acrylic foam tape with a thickness of 1200µm | Tesa |
| Kraton D1340 | Polymodal asymmetric SIS star block copolymer | Kraton polymers |
| Kraton D1161 | Linear block copolymer (15% Styrene, 19% Diblock) | Kraton polymers |
| Escorez 1304 | Aliphatic hydrocarbon resin | Exxon Mobil |
| Escorez 5340 | Cycloaliphatic hydrocarbon resin | Exxon Mobil |
| Escorez 5320 | Cycloaliphatic hydrocarbon resin | Exxon Mobil |
| Escorez 5615 | aliphatic/aromatic hydrocarbon resin | Exxon Mobil |
| Regalite R9100 | Partially hydrogenated resin | Eastman |
| Regalite R1090 | Fully hydrogenated resin | Eastman |
| Regalite 1125 | Fully hydrogenated resin | Eastman |
| Piccotac 1020E | Liquid aliphatic hydrocarbon resin | Eastman |
| Novares C120 | Indene coumarone resin | Rüttgers |
| Novares C140 | Indene coumarone resin | Rüttgers |
| Plastolyn R 1140 | Fully hydrogenated resin | Eastman |
| Nyplast 222B | Mineral Oil | Nynas |
| Glissopal 1000 | Polyisobutylene of Mw=1600g/mol | BASF |
| Glissopal V1500 | Polyisobutylene of Mw=4140g/mol | BASF |
| Oppanol B10N | Polyisobutylene of Mw=36000g/mol | BASF |
| Oppanol B12N | Polyisobutylene of Mw=51000g/mol | BASF |
| EMS FN100MD | Expandable microspheres | Lehmann & Voss |
| Irganox 1010 | Heat stabilizer | BASF |
| Irgacure 651 | 2,2 dimethoxy-2-phenylacetophenone | BASF |
| Renol Schwarz | Carbon Black Masterbatch in EVA | Clariant |
| IOA | Isooctyl acrylate is a ester of isooctylalcohol and acrylic acid | 3M, Germany |
| BA | Butyl acrylate | Sigma Aldrich |
| AA | Acrylic acid | Sigma Aldrich |
| IOTG | Isooctyl thioglycolate, chain transfer agent | Sigma Aldrich |

### Screening of raw materials with regard to low VOC:

In order to screen the raw materials in advance concerning their outgassing behavior and thermal stability, an oven outgassing test, as described in the previous test method part, is performed at 120°C and 160°C. Results are provided in Table 2 below.

**Table 2**

| Raw Material | weight loss 2h 120°C (%) | weight loss 2h 160°C (%) |
|---|---|---|
| Regalite 9100 | 0,15 | 2,53 |
| Regalite 1090 | 0,25 | 4,99 |
| Escorez 5615 | 0,04 | 0,21 |
| Escorez 1304 | 0,06 | 0,52 |
| Piccotac 1020E | 0,20 | 1,12 |
| Oppanol B10N | 0,05 | 0,22 |
| Oppanol B12N | - | 0,07 |

In Table 2, the tackifying hydrocarbon resins Escorez 5615 and Escorez 1304 show a very low outgassing at 120°C and a very good thermal stability at 160°C. In contrast, Regalite R9100 and R1090 show higher outgassing behavior at 120°C and a significant weight loss at 160°C. The weight loss at 160°C provides a good indication of the thermal stability of a raw material and its behavior when processed at high temperatures in a hot melt type process.

Concerning the plasticizers, both of the polyisobutylene resins Oppanol B10N and B12N show very low outgassing behavior when compared to the liquid hydrocarbon resin Piccotac 1020E and excellent heat stability at 160°C. Based on these findings a preselection concerning low VOC behavior can be envisaged.

Another way of pre-screening the raw materials concerning their improved low VOC behavior is by TGA (thermogravimetric analysis) measurements, as previously described in the test method section. Results of the TGA measurements are found in Table 3 below, the values are an average of 2 measurements. These include also a comparison to an existing and commercially available acrylic adhesive based foam tape.

**Table 3**

| Raw Material | Weight loss 30 min at 90°C (in ppm) | Weight loss 60 min at 120°C (in ppm) |
|---|---|---|
| ACX 7065 | 1974±13 | 5732±112 |
| Kraton D1340 | 326±76 | 234±99 |
| Kraton D1161 | 669±47 | 253±101 |
| Regalite 9100 | 1353±223 | 10905±1325 |
| Regalite 1090 | 2409±457 | 20792±284 |
| Regalite 1125 | 1472±134 | 2037±296 |
| Escorez 1304 | 296±64 | 1476±155 |
| Escorez 5615 | 258±153 | 727±180 |
| Escorez 5340 | 335±35 | 590±43 |
| Escorez 5320 | 334±1 | 1124±68 |
| Plastolyn R1140 | 344±15 | 541±10 |
| Novares C120 | 1000±29 | 5849±116 |
| Novares C140 | 757±2 | 1376±113 |
| Nyplast 222B | 1225±231 | 16817±1664 |
| Glissopal 1000 | 8730±622 | 18363±658 |
| Glissopal V1500 | 2310±148 | 4419±206 |
| Oppanol B10N | 558±75 | 1707±274 |
| Oppanol B12N | 285±34 | 538±25 |

From Table 3, the difference in outgassing of polymeric plasticizers in function of their weight average molecular weight Mw can be further seen. While the polyisobutylene plasticizer Oppanol B12N with 51000g/mol has very low outgassing at 90 and 120°C, Glissopal 1000 and V1500 which are polyisobutylenes having a weight average molecular weight Mw of respectively 1600 and 4140g/mol have very high amounts of volatile organic compounds.

Current commercially available acrylic based PSA foam tapes exhibit high levels of VOCs and Fog values when analysed with the TGA test method. The acrylic PSA foam tape ACX 7065 has a weight loss of 1974 ppm after 30 minutes at 90°C and 5732 ppm of weight loss after further 60 minutes at 120°C.

The combination of oven outgassing test results with TGA test results clearly indicates favorable selections of raw materials for low VOC multilayer pressure sensitive adhesive assemblies.

### Example preparation (3 - layer coextruded PSA assemblies):

### First and/or second pressure sensitive adhesive layer(s) preparation ("skin layer")

Pressure sensitive skin adhesive formulations with compositions as described in Table 4 are compounded in a 25 mm co-rotating twin screw extruder (ZSK25 from Werner & Pfleiderer, Stuttgart, Germany ) having 11 heat zones and a L/D (length/diameter) ratio of 46.

**Table 4**

| | Skin1 (S1) | | Skin2 (S2) | | Skin3 (S3) | | Skin4 (S4) | |
|---|---|---|---|---|---|---|---|---|
| Kraton D1340 | 32.43 | Blend 1 | 32.43 | Blend 1 | 31.78 | Blend 1 | 32.28 | Blend 3 |
| Kraton D1161 | 13.90 | | 13.90 | | 13.62 | | 13.84 | |
| Irganox 1010 | 1.37 | | 1.37 | | 1.35 | | 1.37 | |
| Carbon Black MB | | | | | | | 0.39 | |
| Escorez 5615 | 44.81 | | 40.74 | Blend 2 | 39.92 | Blend 2 | 31.99 | Blend 4 |
| Novares C140 | | | 4.07 | | 3.99 | | 10.66 | |
| Oppanol B12N | 7.49 | | 7.49 | | 7.34 | | 7.45 | |
| Acrylate polymer (45 parts IOA/45 parts BA/10 parts AA) | | | | | 2.00 | | 2.03 | |

The acrylate polymer listed in upper Table 4 is prepared by mixing 45 parts of isooctyl acrylate (IOA), 45 parts of butyl acrylate (BA), 10 parts of acrylic acid (AA), 0.15 part IRGACURE 651, and 0.06 part of isooctyl thioglycolate (IOTG). Discreet film packages are formed from a packaging film (0.0635 mm thick ethylene vinyl acetate copolymer film sold as VA-24 Film from CT Film, Dallas, Texas). The acrylate composition is sealed into the film packages, which measures approximately 10 centimeters (cm) by 5 cm by 0.5 cm thick. While immersed in a water bath maintained at between about 21°C and about 32° C, the packages are exposed to ultraviolet (UV) radiation having an intensity of about 3.5 milliwatts per square centimeter (mW/sq cm), and a total energy of about 1680 milliJoules per square centimeter (mJ/sqcm). The method of forming the packages and curing are described in Example 1 of U. S. Patent No. 5,804,610.

The temperature profile and the extrusion conditions for making the first and/or second pressure sensitive adhesive layer ("skin layers") are described in Table 5 for skin layers 1-3. The screw speed of the twin screw extruder is set at 300rpm for producing these skin layers.

In a first step Kraton D 1340, Kraton 1161 and Irganox1010 are blended in a tumbling mixer resulting in Blend 1. Blend 1 is then fed into the twin screw extruder at Zone Z1 using a loss in weight twin screw feeder from K-Tron. The tackifier resin Escorez 5615 or the tackifier Blend 2 (Escorez 5615 and Novares C140) are added at Zone Z1 as well using a loss in weight screw feeder available from Brabender. For the skin construction 3 (S3), the acrylate polymer 45/45/10 IOA/BA/AA is additionally fed in zone Z5 using a single screw extruder. In a final step, plasticizer Oppanol B12N is fed into the extrusion line at Zone Z7 using a 20L drum unloader (available as Robatech RMC20).

**Table 5**

| Zone (Barrel) | Temperature (°C) | Description |
|---|---|---|
| Z1 | 80 | Feeding of Blend1 (Kraton1340, Kraton 1161, Irganox1010) and Escorez 5615 or tackifier Blend 2 |
| Z2 | 80 | |
| Z3 | 95 | |
| Z4 | 115 | |
| Z5 | 120 | Feeding of the acrylate polymer using a single screw extruder |
| Z6 | 120 | |
| Z7 | 120 | Feeding of Oppanol B12N using a drum unloader RMC 20 |
| Z8 | 135 | |
| Z9 | 150 | |
| Z10 | 160 | |
| Z11 | 160 | |
| Gear pump | 165 | |
| Hose | 170 | |
| Outer channels of 3 Layer Die | 160 | Coating of the 3-layer PSA assembly |

The temperature profile and the extrusion conditions for making the first and/or second pressure sensitive adhesive layer ("skin layers") are described in Table 6 for skin layer 4, which is used for making the two comparative, laminated 3-layer PSA assembly examples. The screw speed of the twin screw extruder is set at 300rpm for compounding skin layer 4.

**Table 6**

| Zone (Barrel) | Temperature (°C) | Description |
|---|---|---|
| Z1 | 175 | Feeding of Blend 3 (Kraton D1340, Kraton D1161, Irganox1010 and Carbon Black MB) using a Linden feeder |
| Z2 | 175 | |
| Z3 | 175 | Feeding of Blend 4 of (Escorez 5615 and Novares C140) using a vibratory feeder from K-Tron and a side stuffer from Werner & Pfleiderer |
| Z4 | 175 | |
| Z5 | 175 | Feeding of the acrylate polymer using a single screw extruder |
| Z6 | 175 | |
| Z7 | 175 | Feeding of Oppanol B12N using a drum unloader RMC 20 |
| Z8 | 175 | |
| Z9 | 175 | |
| Z10 | 175 | |
| Z11 | 175 | |
| Gear pump | 175 | |
| Hose | 175 | |
| Rotary rod die | 175 | Coating of the PSA layer. Total throughput 4.933 kg/h. |

Kraton D1340, Kraton D1161, Irganox1010 and the Carbon Black MB are blended in a tumbling mixer providing Blend 3. Blend 3 is fed in the twin screw extruder with a throughput of 2.361kg/h in Zone Z1 using a Linden Feeder. The hydrocarbon tackifier Blend 4 (Escorez 5615 and Novares C140) is added in Zone Z3 using a vibratory feeder (K-SFS-24 from K-Tron) and a side stuffer from Werner & Pfleiderer with a throughput of 2.104kg/h. The acrylate polymer (45/45/10 IOA/BA/AA) is fed in zone Z5 using a single screw extruder. Oppanol B12N is fed in the open port in Zone Z7 with a throughput of 0.368kg/h using a 20L drum unloader (Robatech RMC20). Between the extruder and the die, the adhesive melt is metered by a gear pump (175°C) through a heated hose (175°C), which makes the junction between the extruder and the coating die (175°C). Skin layer 4 has a thickness of about 90µm.

### Foam adhesive layers

Foam adhesive layer formulations are described in Table 7 and were compounded in a 25 mm co- rotating twin screw extruder (ZSK25 from Werner& Pfleiderer, Stuttgart, Germany) having 11 heat zones and a L/D (length/diameter) ratio of 46.

**Table 7**

| | Foam 1 | | Foam 2 | | Foam 3 | | Foam 4 | |
|---|---|---|---|---|---|---|---|---|
| Kraton D1340 | 45 | Blend 5 | 45 | Blend 5 | 35 | Blend 6 | 35 | Blend 6 |
| Irganox 1010 | 1.35 | | 1.35 | | 1 | | 1 | |
| Escorez 5615 | 40 | | 47.5 | | 50 | | 50 | |
| Oppanol B12N | 15 | | 7.5 | | 15 | | 15 | |
| EMS | 4 | | 4 | | 3 | | 4 | |

The temperature profile of the extruder and the extrusion conditions are described later in Table 8 for the making of Foams 1 and 2, whilst the extrusion conditions for Foams 3 and 4 are listed in Table 9. For Foams 1 and 2, the twin screw extruder is operated at a speed of 370rpm. In a first step, Kraton D1340 is blended with Irganox 1010 in a tumbling mixer resulting in Blend 5. Blend 5 is then fed into the twin screw extruder at Zone Z2 using a loss in weight feeder (K-Tron). The hydrocarbon tackifier resin Escorez 5615 is added in Zone Z2 as well, using a loss in weight screw feeder from Brabender. In Zone Z7 the plasticizer Oppanol B12N is fed using a 20L drum unloader (GX23 from SM Klebetechnik). The expandable microspheres FN100MD are then finally added in Zone Z10 via side stuffer from Werner& Pfleiderer fed by a loss in weight twin screw feeder (MiniTwin from Brabender). Between the extruder and the die, the adhesive melt is metered by a gear pump (150°C) through a heated hose (150°C), which makes the junction between the extruder and the die. The temperature of the coating die is set at 160°C for Foam 3 and 170°C for Foam 4. The expandable microspheres are only allowed to expand after passing the 3-layer die at the end of the extrusion line, leading to a 3-layer multilayer pressure sensitive assembly.

**Table 8**

| Zone (Barrel) | Temperature (°C) | Description |
|---|---|---|
| Z1 | 50 | |
| Z2 | 30 | Feeding of Blend 5 (Kraton D 1340 and Irganox 1010) using a loss in weight twin screw feeder from K-Tron. Feeding of Escorez 5615 using a loss in weight feeder from Brabender. |
| Z3 | 50 | |
| Z4 | 130 | Feeding of Oppanol B12N using a 20L drum unloader (GX23 from SM Klebetechnik). |
| Z5 | 150 | |
| Z6 | 150 | |
| Z7 | 140 | |
| Z8 | 125 | |
| Z9 | 120 | |
| Z10 | 120 | Feeding of EMS FN100MD using a gravimetric loss in weight twin screw feeder from Brabender and a twin screw side stuffer from Werner & Pfleiderer. |
| Z11 | 120 | |
| Gear pump | 150 | |
| Hose | 150 | |
| Middle channel of 3 Layer Die | 160 | Coating and expansion of the microspheres. |

For the making of Foams 3 and 4, the screw speed is set at 350rpm. Kraton D1340 is blended with Irganox 1010 in a tumbling mixer resulting in Blend 6. Blend 6 is then fed into the twin screw extruder with a throughput of 2.16kg/h in Zone Z1 using a loss in weight feeder (K-Tron). The hydrocarbon resin tackifier Escorez 5615 is added in Zone Z1 as well, using a vibratory feeder (K-SFS-24 from K-Tron) with a throughput of 3.00kg/h. The plasticizer Oppanol B12N is next fed in Zone Z4 with a throughput of 0.90kg/h using a 20L drum unloader (Robatech RMC20). The expandable microspheres FN100MD are added in Zone Z9 with a throughput of 180g/h employing a loss in weight twin screw feeder (MiniTwin from Brabender). The expandable microspheres are immediately conveyed by the extruder screws and can only expand after passing the rotary rod dye at the end of the extrusion process, leading to a single foam layer.

Between the extruder and the die, the adhesive melt is metered by a gear pump (150°C) and pumped through a heated hose (150°C), which makes the junction between the extruder and the coating die (160°C).

**Table 9**

| Zone (Barrel) | Temperature | Description |
|---|---|---|
| Z1 | 50 | Feeding of Kraton D1340 and Irganox 1010 Blend 6 (2.16kg/h) using a gravimetric feeder (loss in weight) from K-Tron Feeding of Escorez 5615 (3.00kg/h) using a vibratory feeder from K-Tron |
| Z2 | 50 | |
| Z3 | 90 | |
| Z4 | 145 | Feeding of Oppanol B12N (0.90 kg/h) using a drum unloader RMC 20 |
| Z5 | 150 | |
| Z6 | 150 | |
| Z7 | 150 | |
| Z8 | 135 | |
| Z9 | 125 | Feeding of EMS FN100MD (180 g/h) gravimetric loss in weight twin screw feeder from Brabender |
| Z10 | 150 | |
| Z11 | 150 | |
| Gear pump | 150 | |
| Hose | 150 | |
| Rotary rod die | 160 | Coating and expansion of the microspheres. |

### Examples preparation:

As multilayer pressure sensitive adhesive assemblies according to the present disclosure, 3-layer co-extruded tapes are prepared by co-extruding a first and second pressure sensitive adhesive layer onto the opposing sides of a polymeric foam layer through a 3-layer multi manifold film die. The 3-layer co-extruded pressure sensitive adhesive assembly is cast between a silicone coated casting roll and a siliconized paper liner entrained by a second chill roll. The chill rolls are cooled with water at a temperature of about 13°C. Once cooled down the co-extruded pressure sensitive adhesive assembly leaves the silicone release coated roll hereby adhering to the silicone coated paper liner and is then rolled up in a winding station. The 3-layer co-extruded pressure sensitive adhesive assembly already had sufficient dimensional stability when wound up, deeming additional in-line e-beam crosslinking optional.

The 3-layer pressure sensitive adhesive assembly examples used for mechanical testing as well as VDA 278 testing, are described later in Table 10. Hereby 3-layer co-extruded pressure sensitive adhesive assemblies without e-beam crosslinking are compared to those exposed to two different types of e-beam conditions: closed face e-beaming (CF) and open face e-beaming (OF). In the closed face (CF) processing, the two opposing sides of each 3-layer co-extruded multilayer pressure sensitive adhesive assembly are covered with silicone coated polyethylene release liners and the PSA assembly is e-beamed through the liners from both sides. In the opened face e-beam processing, the PSA assemblies are e-beamed from both sides after removing the release liner on top of the first pressure sensitive adhesive layer. E-beaming takes place from both sides with an acceleration tension of 265kV and a dose of 100kGy.

Table 10 still further includes two laminated 3-layer pressure sensitive adhesive assemblies where the first and the second pressure sensitive adhesive layers are laminated in a first step onto the opposing sides of the selected polymericfoam layer. These laminated 3-layer PSA assemblies are then covered on both sides with two-side silicone-coated polyethylene release liner. The samples are then irradiated through the release liner from both sides with an e-beam dose of 100 kGy under an acceleration tension of 280kV.

**Table 10**

| Example | "Skin" layer | Foam layer | Acceleration tension (kV) | E-beam dose (kGy) |
|---|---|---|---|---|
| Ex.1 | S1 | Foam 1 | - | - |
| Ex.2 | S2 | Foam 1 | - | - |
| Ex.3 | S3 | Foam 1 | - | - |
| Ex.4 | S2 | Foam 2 | - | - |
| Ex.3 - 100kGy - (CF) | S3 | Foam 1 | 265 | 100 |
| Ex.1 - 100kGy - (OF) | S1 | Foam 1 | 265 | 100 |
| Ex.2 - 100kGy - (OF) | S2 | Foam 1 | 265 | 100 |
| Ex.3 - 100kGy - (OF) | S3 | Foam 1 | 265 | 100 |
| C1 -100kGy - (CF) | S4 | Foam 3 | 280 | 100 |
| C2 -100kGy - (CF) | S4 | Foam 4 | 280 | 100 |

### Mechanical Test Results of multilayer PSA assembly examples:

### 90°Peel and Static Shear (SS) test results at room temperature (RT) and at 70°C

90° Peel test results and Static Shear test results at RT and at 70°C of the examples are shown in Table 11 below.

**Table 11: 90°Peel and Static Shear at RT and at 70°C test results.**

| Example No | 90° Peel to Uregloss (N/cm) | 90° Peel to CC5 (N/cm) | 90° Peel to PP (N/cm) | Static Shear at RT on CC5(min) | Static Shear at 70°C on CC5 (min) | Failure Mode |
|---|---|---|---|---|---|---|
| Ex.1 (coextruded) | 59.9 | 54.9 | 54.7 | >10000 | n.d. | |
| | | | | >10000 | | |
| Ex.2 (coextruded) | 55.1 | 52.2 | 55.1 | >10000 | n.d. | |
| | | | | >10000 | | |
| Ex.3 (coextruded) | 66.8 | 59.5 | 45.9 | >10000 | n.d. | |
| | | | | >10000 | | |
| Ex.4 (coextruded) | 67.4 | 57.4 | 39.8 | >10000 | n.d. | |
| | | | | >10000 | | |
| Ex.3-100kGy-CF (coextruded) | 58.0 | 54.0 | 24.0 | >10000 | >10000 | |
| | | | | >10000 | >10000 | |
| Ex.1-100kGy-OF (coextruded) | 40.6 | 45.1 | n.d. | >10000 | >10000 | |
| | | | | >10000 | >10000 | |
| Ex.2-100kGy-OF (coextruded) | 46.8 | 56.3 | n.d. | >10000 | >10000 | |
| | | | | >10000 | >10000 | |
| Ex.3-100kGy-OF (coextruded) | 58.0 | 62.2 | n.d. | >10000 | >10000 | |
| | | | | >10000 | >10000 | |
| C1-100kGy-CF (laminated) | 42.6 | 33.0 | n.d. | n.d. | 210 | 2B |
| | | | | | 499 | 2B |
| C2-100kGy-CF (laminated) | 39.4 | n.d. | n.d. | n.d. | 483 | 2B |
| | | | | | 497 | 2B |

2B denotes two bond e.g. delamination of the skin from the core.

The peel performances of all coextruded examples - irrespective if they have undergone e-beam processing or not - are very high on both automotive clear coats (Uregloss, CeramiClear5). The peel performance of the coextruded examples is also very high on low surface energy substrates such as PP. For the e-beam crosslinked constructions, the static shear at 70°C reach >10000 minutes.

In contrast, comparative examples C1 and C2, which are not co-extruded but laminated 3-layer PSA assemblies, the constructions failed in the 70°C static shear test after a few minutes with a 2 bond failure. This is due to the laminated skin delaminating from the core at elevated temperature.

### VDA 278 analysis of the 3-layer pressure sensitive adhesive assembly examples

Table 12 provides an overview of the VOC and FOG levels of some of the 3-layer pressure sensitive adhesive assemblies of the disclosure measured according to the VDA278 test method. For the acrylic based PSA foam tape ACX 7065, the VOC and Fog levels are very high (respectively 2540 ppm and 7870 ppm), whereas for the pressure sensitive adhesive assembly examples according to the disclosure, the VOC and Fog levels are very low with less than 500 ppm for all tested examples.

**Table 12**

| Sample | VOC level from VDA 278 (ppm) | FOG level from VDA 278 (ppm) |
|---|---|---|
| ACX 7065 | 2540 | 7870 |
| Ex.1 - 100kGy - (CF) | 354 | 323 |
| Ex.2 | 224 | 290 |
| Ex.2 - 100kGy - (CF) | 241 | 351 |
| Ex3 - 100kGy - (CF) | 327 | 414 |

## Claims

1. A multilayer pressure sensitive adhesive assembly comprising a polymeric foam layer having a first major surface and a second major surface, wherein the multilayer pressure sensitive adhesive assembly further comprises a first pressure sensitive adhesive layer bonded to the first major surface of the polymeric foam layer and a second pressure sensitive adhesive layer bonded to the second major surface of the polymeric foam layer, wherein the first pressure sensitive adhesive comprises:
a) a multi-arm block copolymer of the formula Qₙ-Y, wherein:
(i) Q represents an arm of the multi-arm block copolymer and each arm independently has the formula G-R,
(ii) n represents the number of arms and is a whole number of at least 3, and
(iii) Y is the residue of a multifunctional coupling agent,
wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polyisobutylene plasticizer having a weight average molecular weight Mw of at least 10.000 g/mol, when measured by light scattering according to ASTM D4001-13;
c) at least one hydrocarbon tackifier selected from the group consisting of polymeric terpenes, hetero-functional terpenes, coumarone-indene resins, esters of rosin acids, disproportionated rosin acid esters, hydrogenated rosin acids, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and blends thereof wherein the hydrocarbon tackifier has a Volatile Organic Compound (VOC) value less than 1000 ppm, when measured by thermogravimetric analysis according to the weight loss test method (TGA test method) described in the experimental section; and
d) optionally, a linear block copolymer of the formula L - (G)ₘ, wherein L is a rubbery block comprising a polymerized olefin, a polymerized conjugated diene, a hydrogenated derivative of a polymerized conjugated diene, or any combinations thereof; and wherein m is 1 or 2;
wherein the multilayer pressure sensitive adhesive assembly is obtained by hotmelt co-extrusion of the polymeric foam layer, the first pressure sensitive adhesive layer and the second pressure sensitive adhesive layer.

2. A multilayer pressure sensitive adhesive assembly according to claim 1, wherein the polymeric plasticizer has a weight average molecular weight Mw of at least 20.000 g/mol, when measured by light scattering according to ASTM D4001-13.

3. A multilayer pressure sensitive adhesive assembly according to any one of the preceding claims, wherein at least one of the glassy blocks of the multi-arm block copolymer is a monovinyl aromatic monomer selected from the group consisting of styrene, styrene-compatible blends, and any combinations thereof, preferably wherein each of the glassy blocks of the multi-arm block copolymer is a monovinyl aromatic monomer selected from the group consisting of styrene, styrene-compatible blends, and any combinations thereof.

4. A multilayer pressure sensitive adhesive assembly according to any one of the preceding claims, wherein at least one arm of the multi-arm block copolymer is selected from the group consisting of styrene-isoprene-styrene, styrene-butadiene-styrene, styrene-ethylene-butylene-styrene, styrene-ethylene-propylene-styrene, and combinations thereof, preferably wherein each arm of the multi-arm block copolymer is selected from the group consisting of styrene-isoprene-styrene, styrene-butadiene-styrene, styrene-ethylene-butylene-styrene, styrene-ethylene-propylene-styrene, and any combinations thereof.

5. A multilayer pressure sensitive adhesive assembly according to any one of the preceding claims, wherein the total amount of the polymeric plasticizer in the first pressure sensitive adhesive is of no less than 6 wt%, when expressed as a percent by weight based on the total weight of the first pressure sensitive adhesive.

6. A multilayer pressure sensitive adhesive assembly according to any one of the preceding claims, which is crosslinked.

7. A multilayer pressure sensitive adhesive assembly according to any one of the preceding claims, wherein the first pressure sensitive adhesive comprises:
a) from 20 wt% to 80 wt% of the multi-arm block copolymer, based on the weight of the first pressure sensitive adhesive;
b) from 20 wt% to 70 wt% of the hydrocarbon tackifier(s), based on the weight of the first pressure sensitive adhesive;
c) from 2 wt% to 20 wt% of the polyisobutylene plasticizer, based on the weight of the pressure sensitive adhesive;
d) optionally, from 3 wt% to 40 wt% of linear block copolymer, based on the weight of the first pressure sensitive adhesive; and
e) optionally, from 0.1 wt% to 10 wt% of a crosslinking additive, based on the weight of the first pressure sensitive adhesive foam, and wherein the crosslinking additive is preferably selected from the group of multifunctional (meth)acrylate compounds.

8. A multilayer pressure sensitive adhesive assembly according to any of the preceding claims, wherein the first pressure sensitive adhesive layer and the second pressure sensitive adhesive layer each independently comprise a pressure sensitive adhesive as described in any of claims 1 to 7.

9. A multilayer pressure sensitive adhesive assembly according to any of the preceding claims, wherein the polymeric foam layer comprises a polymer base material selected from the group consisting of rubber-based elastomeric materials, polyacrylates, polyurethanes, polyolefins, polyamides, polyesters, polyethers, polyisobutylene, polystyrenes, polyvinyls, polyvinylpyrrolidone, and any combinations, copolymers or mixtures thereof.

10. A multilayer pressure sensitive adhesive assembly according to claim 9, wherein the polymeric foam layer comprises a polymer base material selected from the group consisting of rubber-based elastomeric materials.

11. A multilayer pressure sensitive adhesive assembly according to any of the preceding claims, wherein the polymeric foam layer further comprises at least one filler material which is preferably selected from the group consisting of microspheres; expandable microspheres, preferably pentane filled expandable microspheres; expanded microspheres; gaseous cavities; glass beads; glass microspheres; glass bubbles and any combinations or mixtures thereof; more preferably from the group consisting of expandable microspheres, glass bubbles, and any combinations or mixtures thereof.

12. A method of manufacturing a multilayer pressure sensitive adhesive assembly according to any of claims 1 to 11, which comprises the step of hotmelt co-extruding the polymeric foam layer, the first pressure sensitive adhesive layer, and the second pressure sensitive adhesive layer.

13. A method according to claim 12, which comprises the steps of:
a) compounding the multi-arm block copolymer, the polyisobutylene plasticizer, the at least one hydrocarbon tackifier; optionally, the linear block copolymer, optionally, a crosslinking agent which is preferably selected from the group of multifunctional (meth)acrylate compounds; thereby forming a hotmelt compound of the first pressure sensitive adhesive layer;
b) providing a hotmelt compound of the polymeric foam layer;
c) providing a hotmelt compound of the second pressure sensitive adhesive layer;
d) hotmelt co-extruding the polymeric foam layer, the first pressure sensitive adhesive layer, and the second pressure sensitive adhesive layer thereby forming a hotmelt co-extruded multilayer pressure sensitive adhesive assembly; and
e) optionally, crosslinking the hotmelt co-extruded multilayer pressure sensitive adhesive assembly obtained in step d), preferably with actinic radiation, more preferably with e-beam irradiation.

14. Use of a multilayer pressure sensitive adhesive assembly according to any of claims 1 to 11 for industrial applications, preferably for interior applications, more preferably for construction market applications, automotive applications or electronic applications.

## Patentansprüche

1. Eine mehrschichtige Haftkleberanordnung, umfassend eine Polymerschaumschicht mit einer ersten Hauptoberfläche und einer zweiten Hauptoberfläche, wobei die mehrschichtige Haftkleberanordnung ferner eine erste Haftkleberschicht, die an die erste Hauptoberfläche der Polymerschaumschicht gebunden ist, und eine zweite Haftkleberschicht, die an die zweite Hauptoberfläche der Polymerschaumschicht gebunden ist, umfasst, wobei der erste Haftkleber umfasst:
a) ein mehrarmiges Blockcopolymer der Formel Qn-Y, wobei:
(i) Q für einen Arm des mehrarmigen Blockcopolymers steht und jeder Arm unabhängig die Formel G-R aufweist,
(ii) n für die Anzahl der Arme steht und eine ganze Zahl von mindestens 3 ist und
(iii) Y der Rest eines multifunktionellen Haftvermittlers ist, wobei jedes R ein gummiartiger Block ist, der ein polymerisiertes konjugiertes Dien, ein hydriertes Derivat eines polymerisierten konjugierten Diens oder Kombinationen davon umfasst; und jedes G ein glasartiger Block ist, der ein polymerisiertes aromatisches Monovinylmonomer umfasst;
b) einen Polyisobutylen-Weichmacher mit einem Molekulargewicht-Gewichtsmittel Mw von mindestens 10.000 g/mol, gemessen durch Lichtstreuung gemäß ASTM D4001-13;
c) mindestens einen Kohlenwasserstoff-Haftvermittler, ausgewählt aus der Gruppe bestehend aus polymeren Terpenen, heterofunktionellen Terpenen, Cumaron-Inden-Harzen, Estern von Harzsäuren, disproportionierten Harzsäureestern, hydrierten Harzsäuren, aliphatischen C5-Harzen, hydrierten aromatischen C9-Harzen, aliphatischen/aromatischen C5/C9-Harzen, Dicyclopentadienharzen, hydrierten Kohlenwasserstoffharzen aus C5/C9- und Dicyclopentadienvorläufern, hydrierten Styrolmonomerharzen und Mischungen davon, wobei der Kohlenwasserstoff-Haftvermittler einen Wert von flüchtigen organischen Verbindungen (VOC) von weniger als 1000 ppm aufweist, wenn durch thermogravimetrische Analyse gemäß dem Gewichtsverlust-Prüfverfahren (TGA-Prüfverfahren), das im Experimentabschnitt beschrieben ist, gemessen wird; und
d) wahlweise ein lineares Blockcopolymer der Formel L - (G)m, wobei L ein gummiartiger Block ist, der ein polymerisiertes Olefin, ein polymerisiertes konjugiertes Dien, ein gehärtetes Derivat eines polymerisierten konjugierten Diens oder beliebige Kombinationen davon umfasst; und wobei m 1 oder 2 ist;
wobei die mehrschichtige Haftkleberanordnung durch Schmelzcoextrusion der Polymerschaumschicht, der ersten Haftkleberschicht und der zweiten Haftkleberschicht erhalten wird.

2. Eine mehrschichtige Haftkleberanordnung nach Anspruch 1, wobei der polymere Weichmacher ein Molekulargewicht-Gewichtsmittel Mw von mindestens 20.000 g/mol aufweist, wenn durch Lichtstreuung gemäß ASTM D4001-13 gemessen wird.

3. Eine mehrschichtige Haftkleberanordnung nach einem der vorstehenden Ansprüche, wobei mindestens einer der glasartigen Blöcke des mehrarmigen Blockcopolymers ein aromatisches Monovinylmonomer ist, ausgewählt aus der Gruppe bestehend aus Styrol, styrolkompatiblen Mischungen und beliebigen Kombinationen davon, wobei vorzugsweise jeder der glasartigen Blöcke des mehrarmigen Blockcopolymers ein aromatisches Monovinylmonomer ist, ausgewählt aus der Gruppe bestehend aus Styrol, styrolkompatiblen Mischungen und beliebigen Kombinationen davon.

4. Eine mehrschichtige Haftkleberanordnung nach einem der vorstehenden Ansprüche, wobei mindestens ein Arm des mehrarmigen Blockcopolymers ausgewählt ist aus der Gruppe bestehend aus Styrol-Isopren-Styrol, Styrol-Butadien-Styrol, Styrol-Ethylen-Butylen-Styrol, Styrol-Ethylen-Propylen-Styrol und Kombinationen davon, wobei vorzugsweise jeder Arm des mehrarmigen Blockcopolymers ausgewählt ist aus der Gruppe bestehend aus Styrol-Isopren-Styrol, Styrol-Butadien-Styrol, Styrol-Ethylen-Butylen-Styrol, Styrol-Ethylen-Propylen-Styrol und beliebigen Kombinationen davon.

5. Eine mehrschichtige Haftkleberanordnung nach einem der vorstehenden Ansprüche, wobei die Gesamtmenge des polymeren Weichmachers in dem ersten Haftkleber nicht weniger als 6 Gew.-% beträgt, ausgedrückt als Gewichtsprozent bezogen auf das Gesamtgewicht des ersten Haftklebers.

6. Eine mehrschichtige Haftkleberanordnung nach einem der vorstehenden Ansprüche, die vernetzt ist.

7. Eine mehrschichtige Haftkleberanordnung nach einem der vorstehenden Ansprüche, wobei der erste Haftkleber umfasst:
a) von 20 Gew.-% bis 80 Gew.-% das mehrarmige Blockcopolymer, bezogen auf das Gewicht des ersten Haftklebers;
b) von 20 Gew.-% bis 70 Gew.-% den bzw. die Kohlenwasserstoff-Haftvermittler, bezogen auf das Gewicht des ersten Haftklebers;
c) von 2 Gew.-% bis 20 Gew.-% den Polyisobutylen-Weichmacher, bezogen auf das Gewicht des Haftklebers;
d) wahlweise von 3 Gew.-% bis 40 Gew.-% lineares Blockcopolymer, bezogen auf das Gewicht des ersten Haftklebers; und
e) wahlweise von 0,1 Gew.-% bis 10 Gew.-% ein Vernetzungsadditiv, bezogen auf das Gewicht des ersten Haftkleberschaums, und wobei das Vernetzungsadditiv vorzugsweise ausgewählt ist aus der Gruppe multifunktioneller (Meth-)acrylat-Verbindungen.

8. Eine mehrschichtige Haftkleberanordnung nach einem der vorstehenden Ansprüche, wobei die erste Haftkleberschicht und die zweite Haftkleberschicht jeweils unabhängig voneinander einen Haftkleber nach einem der Ansprüche 1 bis 7 umfassen.

9. Eine mehrschichtige Haftkleberanordnung nach einem der vorstehenden Ansprüche, wobei die Polymerschaumschicht ein Polymergrundmaterial umfasst, das ausgewählt ist aus der Gruppe bestehend aus gummibasierten Elastomermaterialien, Polyacrylaten, Polyurethanen, Polyolefinen, Polyamiden, Polyestern, Polyethern, Polyisobutylenen, Polystyrolen, Polyvinylen, Polyvinylpyrrolidon und beliebigen Kombinationen, Copolymeren oder Mischungen davon.

10. Eine mehrschichtige Haftkleberanordnung nach Anspruch 9, wobei die Polymerschaumschicht ein Polymergrundmaterial umfasst, das ausgewählt ist aus der Gruppe bestehend aus gummibasierten Elastomermaterialien.

11. Eine mehrschichtige Haftkleberanordnung nach einem der vorstehenden Ansprüche, wobei die Polymerschaumschicht ferner mindestens ein Füllmaterial umfasst, das vorzugsweise ausgewählt ist aus der Gruppe bestehend aus Mikrokügelchen; expandierbaren Mikrokügelchen, vorzugsweise pentangefüllten expandierbaren Mikrokügelchen; expandierten Mikrokügelchen; gasförmigen Hohlräumen, Glaskügelchen; Glasmikrokügelchen; Glasblasen und beliebigen Kombinationen oder Mischungen davon; mehr bevorzugt aus der Gruppe bestehend aus expandierbaren Mikrokügelchen, Glasblasen und beliebigen Kombinationen oder Mischungen davon.

12. Ein Verfahren zum Herstellen einer mehrschichtigen Haftkleberanordnung nach einem der Ansprüche 1 bis 11, das den Schritt des Schmelzcoextrudierens der Polymerschaumschicht, der ersten Haftkleberschicht und der zweiten Haftkleberschicht umfasst.

13. Verfahren nach Anspruch 12, umfassend die folgenden Schritte:
a) Compoundieren des mehrarmigen Blockcopolymers, des Polyisobutylen-Weichmachers, the des mindestens einen Kohlenwasserstoff-Haftvermittlers; wahlweise des linearen Blockcopolymers, wahlweise eines Vernetzungsmittels, das vorzugsweise aus der Gruppe von multifunktionellen (Meth)acrylatverbindungen ausgewählt ist; wodurch eine Schmelzverbindung der ersten Haftkleberschicht gebildet wird;
b) Bereitstellen einer Schmelzverbindung der Polymerschaumschicht;
c) Bereitstellen einer Schmelzverbindung der zweiten Haftkleberschicht;
d) Schmelzcoextrudieren der Polymerschaumschicht, der ersten Haftkleberschicht und der zweiten Haftkleberschicht, wodurch eine schmelzcoextrudierte mehrschichtige Haftkleberanordnung gebildet wird; und
e) wahlweise Vernetzung der in Schritt d) erhaltenen schmelzcoextrudierten mehrschichtigen Haftkleberanordnung, vorzugsweise mit aktinischer Strahlung, mehr bevorzugt mit Elektronenstrahlbestrahlung.

14. Verwendung einer mehrschichtigen Haftkleberanordnung nach einem der Ansprüche 1 bis 11 für industrielle Anwendungen, vorzugsweise für Anwendungen im Innenbereich, mehr bevorzugt für Bauanwendungen, Automobilanwendungen oder elektronische Anwendungen.

## Revendications

1. Ensemble adhésif sensible à la pression multicouche comprenant une couche de mousse polymère ayant une première surface principale et une deuxième surface principale, dans lequel l'ensemble adhésif sensible à la pression multicouche comprend en outre une première couche d'adhésif sensible à la pression liée à la première surface principale de la couche de mousse polymère et une deuxième couche d'adhésif sensible à la pression liée à la deuxième surface principale de la couche de mousse polymère, dans lequel le premier adhésif sensible à la pression comprend :
a) un copolymère séquencé à bras multiples de la formule Qn-Y, dans lequel :
(i) Q représente un bras du copolymère séquencé à bras multiples et chaque bras est indépendamment de formule G-R,
(ii) n représente le nombre de bras et est un nombre entier d'au moins 3, et
(iii) Y est le résidu d'un agent de couplage multifonctionnel, dans lequel chaque R est une séquence caoutchouteuse comprenant un diène conjugué polymérisé, un dérivé hydrogéné d'un diène conjugué polymérisé, ou des combinaisons de ceux-ci ; et chaque G est une séquence vitreuse comprenant un monomère aromatique monovinylique polymérisé ;
b) un plastifiant polyisobutylène ayant une masse moléculaire moyenne en poids Mw d'au moins 10 000 g/mol, lorsqu'on mesure par diffusion de lumière selon ASTM D4001-13 ;
c) au moins un agent poisseux hydrocarboné choisi dans le groupe constitué de terpènes polymères, terpènes hétérofonctionnels, résines de coumarone-indène, esters d'acides de colophane, esters d'acides de colophane dismutés, acides de colophane hydrogénés, résines aliphatiques en C5, résines aromatiques hydrogénées en C9, résines aliphatiques/aromatiques en C5/C9, résines dicyclopentadiéniques, résines d'hydrocarbure hydrogéné découlant de précurseurs en C5/C9 et dicyclopentadiéniques, résines de monomère styrénique hydrogéné, et mélanges de ceux-ci dans lequel l'agent poisseux hydrocarboné a une valeur de composés organiques volatils (COV) inférieure à 1000 ppm, lorsqu'on mesure par analyse thermogravimétrique selon le procédé de test de perte de poids (procédé de test TGA) décrit dans la section expérimentale ; et
d) facultativement, un copolymère séquencé linéaire de la formule L - (G)m, dans lequel L est une séquence caoutchouteuse comprenant une oléfine polymérisée, un diène conjugué polymérisé, un dérivé hydrogéné d'un diène conjugué polymérisé, ou n'importe quelles combinaisons de ceux-ci ; et dans lequel m vaut 1 ou 2 ;
dans lequel l'ensemble adhésif sensible à la pression multicouche est obtenu par coextrusion en fusion à chaud de la couche de mousse polymère, de la première couche d'adhésif sensible à la pression et de la deuxième couche d'adhésif sensible à la pression.

2. Ensemble adhésif sensible à la pression multicouche selon la revendication 1, dans lequel le plastifiant polymère a une masse moléculaire moyenne en poids Mw d'au moins 20 000 g/mol, lorsqu'on mesure par diffusion de lumière selon ASTM D4001-13.

3. Ensemble adhésif sensible à la pression multicouche selon l'une quelconque des revendications précédentes, dans lequel au moins une des séquences vitreuses du copolymère séquencé à bras multiples est un monomère aromatique monovinylique choisi dans le groupe constitué de styrène, mélanges compatibles avec du styrène, et n'importe quelles combinaisons de ceux-ci, de préférence dans lequel chacune des séquences vitreuses du copolymère séquencé à bras multiples est un monomère aromatique monovinylique choisi dans le groupe constitué de styrène, mélanges compatibles avec du styrène, et n'importe quelles combinaisons de ceux-ci.

4. Ensemble adhésif sensible à la pression multicouche selon l'une quelconque des revendications précédentes, dans lequel au moins un bras du copolymère séquencé à bras multiples est choisi dans le groupe constitué de styrène-isoprène-styrène, styrène-butadiène-styrène, styrène-éthylène-butylène-styrène, styrène-éthylène-propylène-styrène, et combinaisons de ceux-ci, de préférence dans lequel chaque bras du copolymère séquencé à bras multiples est choisi dans le groupe constitué de styrène-isoprène-styrène, styrène-butadiène-styrène, styrène-éthylène-butylène-styrène, styrène-éthylène-propylène-styrène, et n'importe quelles combinaisons de ceux-ci.

5. Ensemble adhésif sensible à la pression multicouche selon l'une quelconque des revendications précédentes, dans lequel la quantité totale du plastifiant polymère dans le premier adhésif sensible à la pression est d'au moins 6 % en poids, lorsqu'on exprime en tant que pour cent en poids sur la base du poids total du premier adhésif sensible à la pression.

6. Ensemble adhésif sensible à la pression multicouche selon l'une quelconque des revendications précédentes, qui est réticulé.

7. Ensemble adhésif multicouche sensible à la pression selon l'une quelconque des revendications précédentes, dans lequel le premier adhésif sensible à la pression comprend :
a) de 20 % en poids à 80 % en poids du copolymère séquencé à bras multiples, sur la base du poids du premier adhésif sensible à la pression ;
b) de 20 % en poids à 70 % en poids du ou des agent(s) poisseux hydrocarboné(s), sur la base du poids du premier adhésif sensible à la pression ;
c) de 2 % en poids à 20 % en poids du plastifiant polyisobutylène, sur la base du poids de l'adhésif sensible à la pression ;
d) facultativement, de 3 % en poids à 40 % en poids de copolymère séquencé linéaire, sur la base du poids du premier adhésif sensible à la pression ; et
e) facultativement, de 0,1 % en poids à 10 % en poids d'un additif de réticulation, sur la base du poids de la mousse de premier adhésif sensible à la pression, et dans lequel l'additif de réticulation est de préférence choisi dans le groupe de composés (méth)acrylate multifonctionnel.

8. Ensemble adhésif sensible à la pression multicouche selon l'une quelconque des revendications précédentes, dans lequel la première couche d'adhésif sensible à la pression et la deuxième couche d'adhésif sensible à la pression comprennent chacune indépendamment un adhésif sensible à la pression tel que décrit dans l'une quelconque des revendications 1 à 7.

9. Ensemble adhésif sensible à la pression multicouche selon l'une quelconque des revendications précédentes, dans lequel la couche de mousse polymère comprend un matériau de base polymère choisi dans le groupe constitué de matériaux élastomères à base de caoutchouc, polyacrylates, polyuréthanes, polyoléfines, polyamides, polyesters, polyéthers, polyisobutylène, polystyrènes, polyvinyles, polyvinylpyrrolidone, et n'importe quelles combinaisons, n'importe quels copolymères ou n'importe quels mélanges de ceux-ci.

10. Ensemble adhésif sensible à la pression multicouche selon la revendication 9, dans lequel la couche de mousse polymère comprend un matériau de base polymère choisi dans le groupe constitué de matériaux élastomères à base de caoutchouc.

11. Ensemble adhésif sensible à la pression multicouche selon l'une quelconque des revendications précédentes, dans lequel la couche de mousse polymère comprend en outre au moins un matériau de charge qui est choisi de préférence dans le groupe constitué de microsphères ; microsphères expansibles, de préférence microsphères expansibles chargées en pentane ; microsphères expansées ; cavités gazeuses ; billes de verre ; microsphères de verre ; bulles de verre et n'importe quelles combinaisons ou n'importe quels mélanges de ceux-ci ; plus préférablement dans le groupe constitué de microsphères expansibles, bulles de verre, et n'importe quelles combinaisons ou n'importe quels mélanges de ceux-ci.

12. Procédé de fabrication d'un ensemble adhésif sensible à la pression multicouche selon l'une quelconque des revendications 1 à 11, qui comprend l'étape consistant à coextruder en fusion à chaud la couche de mousse polymère, la première couche d'adhésif sensible à la pression, et la deuxième couche d'adhésif sensible à la pression.

13. Procédé selon la revendication 12, qui comprend les étapes consistant à :
a) mélanger le copolymère séquencé à bras multiples, le plastifiant polyisobutylène, l'au moins un agent poisseux hydrocarboné ; facultativement, le copolymère séquencé linéaire, facultativement, un agent de réticulation qui est choisi de préférence dans le groupe de composés (méth)acrylate multifonctionnel ; ce qui forme un composé thermofusible de la première couche d'adhésif sensible à la pression ;
b) fournir un composé thermofusible de la couche de mousse polymère ;
c) fournir un composé thermofusible de la deuxième couche d'adhésif sensible à la pression ;
d) coextruder en fusion à chaud la couche de mousse polymère, la première couche d'adhésif sensible à la pression, et la deuxième couche d'adhésif sensible à la pression ce qui forme un ensemble adhésif sensible à la pression multicouche coextrudé en fusion à chaud ; et
e) facultativement, réticuler l'ensemble adhésif sensible à la pression multicouche coextrudé en fusion à chaud obtenu à l'étape d), de préférence avec un rayonnement actinique, plus préférablement avec une irradiation par faisceau d'électrons.

14. Utilisation d'un ensemble adhésif sensible à la pression multicouche selon l'une quelconque des revendications 1 à 11 pour des applications industrielles, de préférence pour des applications intérieures, plus préférablement pour des applications du secteur de la construction, des applications automobiles ou des applications électroniques.
